# EUROPEAN PATENT APPLICATION

(11) **EP 4 507 235 A1**
(43) Date of publication of application: **12.02.2025**
(21) Application number: 24189105.0
(22) Date of filing: 17.07.2024
(51) Int. Cl.: H04L 5/00, H04L 5/14

(54) **METHOD FOR SETTING SUBBAND FULL DUPLEX RESOURCE AND USER EQUIPMENT**

(30) Priority: 11.08.2023 US 202363532077 P; 10.07.2024 US 202418769296
(71) Applicant: Acer Incorporated, New Taipei City 221 (TW)
(72) Inventor: CHEN, Jen-Hsien, New Taipei City 221 (TW); LEE, Chien-Min, New Taipei City 221 (TW); LO, Li-Chung, New Taipei City 221 (TW)
(74) Representative: Haseltine Lake Kempner LLP

(57) **Abstract**

The embodiments of the disclosure provide a method for setting subband full duplex, SBFD, resource and user equipment, UE (52). The method includes: receiving (S1110) a first configuration (C1) from a network device (51), wherein the first configuration (C1) indicates a plurality of transmission directions for a time period (S); receiving (S1120) a second configuration (C2) from the network device (51), wherein the second configuration (C2) indicates at least one SBFD resource within the time period (S); receiving (S1130) a third configuration (C3) from the network device (51), wherein the third configuration (C3) indicates a downlink bandwidth part and an uplink bandwidth part; performing (S1140) a communication operation with the network device (51) according to the first configuration (C1), the second configuration (C2), and the third configuration (C3).

## Description

### BACKGROUND

### 1. Field of the Invention

The present disclosure generally relates to a communication mechanism, in particular, to a method for setting subband full duplex (SBFD) resource and user equipment (UE).

### 2. Description of Related Art

The "Subband Full Duplex" (SBFD) technology in 5G communication systems (e.g., the New Radio (NR) system) is an innovative method designed to improve spectrum efficiency and communication capacity. SBFD technology divides a communication band into multiple subbands and achieves full-duplex communication on these subbands. The entire communication spectrum is divided into multiple subbands, with some subbands used for downlink (DL) communication and others for uplink (UL) communication.

However, how the SBFD resources are configured for communication need to be defined for further applications.

### SUMMARY OF THE INVENTION

Accordingly, the disclosure is directed to a method for setting SBFD resource and UE, which may be used to solve the above technical problems.

The embodiments of the disclosure provide a method for setting subband full duplex (SBFD) resource, applied to a user equipment (UE). The method includes: receiving, by the UE, a first configuration from a network device, wherein the first configuration indicates a plurality of transmission directions for a time period; receiving, by the UE, a second configuration from the network device, wherein the second configuration indicates at least one SBFD resource within the time period; receiving, by the UE, a third configuration from the network device, wherein the third configuration indicates a downlink bandwidth part and an uplink bandwidth part; performing, by the UE, a communication operation with the network device according to the first configuration, the second configuration, and the third configuration.

The embodiments of the disclosure provide user equipment including a transceiver and a processor. The processor is coupled to the transceiver and configured to perform: controlling the transceiver to receive a first configuration from a network device, wherein the first configuration indicates a plurality of transmission directions for a time period; controlling the transceiver to receive a second configuration from the network device, wherein the second configuration indicates at least one SBFD resource within the time period; controlling the transceiver to receive a third configuration from the network device, wherein the third configuration indicates a downlink bandwidth part and an uplink bandwidth part; and performing a communication operation with the network device according to the first configuration, the second configuration, and the third configuration.

The embodiments of the disclosure provide a method for setting subband full duplex (SBFD) resource, applied to a network device. The method includes: transmitting, by the network device, a first configuration to a user equipment (UE), wherein the first configuration indicates a plurality of transmission directions for a time period; transmitting, by the network device, a second configuration to the UE, wherein the second configuration indicates at least one SBFD resource within the time period; transmitting, by the network device, a third configuration to the UE, wherein the third configuration indicates a downlink bandwidth part and an uplink bandwidth part; and performing, by the network device, a communication operation with the UE according to the first configuration, the second configuration, and the third configuration.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the disclosure.
FIG. 1A shows a schematic diagram of implementing the concept of SBFD.
FIG. 1B shows another schematic diagram of implementing the concept of SBFD.
FIG. 2A shows a first schematic diagram of a possible interference issue while implementing the SBFD technology.
FIG. 2B shows a second schematic diagram of a possible interference issue while implementing the SBFD technology.
FIG. 2C shows a third schematic diagram of a possible interference issue while implementing the SBFD technology.
FIG. 3 shows a functional block diagram of communication device according to an embodiment of the disclosure.
FIG. 4 shows a flow chart of the method for setting SBFD resource according to an embodiment of the disclosure.
FIG. 5 shows a schematic diagram of the transmission directions indicated by the first configuration according to an embodiment of the disclosure.
FIG. 6 shows a schematic diagram of configuring the SBFD resource according to an embodiment of the disclosure.
FIG. 7 shows a schematic diagram of overwriting DL/flexible resource to SBFD resource according to an embodiment of the disclosure.
FIG. 8 shows a schematic diagram of applying the bit map indication according to an embodiment of the disclosure.
FIG. 9 shows another schematic diagram of the transmission directions indicated by the first configuration according to FIG. 5.
FIG. 10 shows a flow chart of the method for setting SBFD resource according to an embodiment of the disclosure.
FIG. 11 shows a flow chart of the method for setting SBFD resource according to an embodiment of the disclosure.
FIG. 12 shows a schematic diagram of an SBFD symbol according to an embodiment of the disclosure.
FIG. 13A shows a schematic diagram of overwriting a flexible symbol according to an embodiment of the disclosure.
FIG. 13B shows a schematic diagram of overwriting a DL symbol according to an embodiment of the disclosure.
FIG. 14 shows a flow chart of the method for setting SBFD resource according to an embodiment of the disclosure.
FIG. 15 shows a flow chart of the method for setting SBFD resource according to an embodiment of the disclosure.
FIG. 16 shows a schematic of modifying the transmission directions by using DCI according to an embodiment of the disclosure.
FIG. 17 shows several cases according to an embodiment of the disclosure.
FIG. 18 shows a schematic diagram of configuring resources according to an embodiment of the disclosure.
FIG. 19A shows a schematic diagram of ignoring the second configuration and configuring the symbol by following the first configuration.
FIG. 19B shows a schematic diagram of ignoring the second configuration and configuring the symbol by following the DCI.
FIG. 20A shows a schematic diagram where the UL subbands are changed to be DL subbands according to an embodiment of the disclosure.
FIG. 20B shows a schematic diagram where the DL subbands are changed to be UL subbands according to an embodiment of the disclosure.
FIG. 21A shows a schematic diagram of ignoring the second configuration and configuring the symbol by following the first configuration.
FIG. 21B shows a schematic diagram of ignoring the second configuration and configuring the symbol by following the DCI.
FIG. 22A shows a schematic diagram where the DL subbands are changed to be UL subbands according to an embodiment of the disclosure.
FIG. 22B shows a schematic diagram where the DL subbands are changed to be UL subbands according to an embodiment of the disclosure.
FIG. 23A shows a schematic diagram of ignoring the second configuration and configuring the symbol by following the first configuration.
FIG. 23B shows a schematic diagram of ignoring the second configuration and configuring the symbol by following the DCI.
FIG. 24 shows a schematic diagram of configuring SBFD resources according to an embodiment of the disclosure.
FIG. 25 shows a schematic diagram of configuring a resource for legacy/advanced UE by using DCI.
FIG. 26 shows a schematic diagram of configuring a resource for legacy/advanced UE by using DCI.
FIG. 27 shows a schematic diagram of configuring a resource by using DCI according to an embodiment of the disclosure.
FIG. 28 shows a schematic diagram of configuring a resource by using DCI according to an embodiment of the disclosure.
FIG. 29A shows a schematic diagram of configuring a resource as SBFD resource by using DCI.
FIG. 29B shows a schematic diagram of configuring a resource as SBFD resource by using DCI.
FIG. 29C shows a schematic diagram of configuring a resource as SBFD resource by using DCI.
FIG. 30 shows a schematic diagram of applying the control command according to an embodiment of the disclosure.
FIG. 31A shows a schematic diagram of applying the control command according to an embodiment of the disclosure.
FIG. 31B shows a schematic diagram of applying the control command according to an embodiment of the disclosure.
FIG. 32 shows a schematic diagram of unavailable SBFD resources according to an embodiment of the disclosure.
FIG. 33 shows a schematic diagram of applying the control command according to an embodiment of the disclosure.
FIG. 34 shows a schematic diagram of handling a missed control command according to an embodiment of the disclosure.
FIG. 35 shows a schematic diagram of handling a missed control command according to an embodiment of the disclosure.
FIG. 36 shows a schematic diagram of handling a missed control command according to an embodiment of the disclosure.
FIG. 37 shows a schematic diagram of handling a missed control command according to an embodiment of the disclosure.
FIG. 38 shows a schematic diagram of applying the counter of the control command according to an embodiment of the disclosure.
FIG. 39 shows a schematic diagram of applying the counter of the control command according to an embodiment of the disclosure.
FIG. 40 shows a schematic diagram of implementing the control command as a bitmap according to an embodiment of the disclosure.
FIG. 41 shows a schematic diagram of implementing the control command as a bitmap according to an embodiment of the disclosure.
FIG. 42 shows a schematic diagram of implementing the control command as a bitmap according to an embodiment of the disclosure.
FIG. 43 shows a schematic diagram of implementing the control command as a bitmap according to FIG. 42.
FIG. 44 shows a flow chart of the method for setting SBFD resource according to an embodiment of the disclosure.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

The full duplex mentioned in the above may be implemented in a time division duplex (TDD) way, or more specifically, subband non-overlapping full duplex at the gNB side within a conventional TDD band.

With the development of the SBFD technology, it is expected that when SBFD is deployed, both legacy UEs and SBFD-capable UEs will coexist in the same cell for the foreseeable future. This will enable benefits for SBFD-capable UEs, such as improved uplink coverage and/or improved uplink latency. Additionally, it will allow legacy UEs to operate in a cell where SBFD is deployed without requiring the implementation of new Rel-18 features related to SBFD.

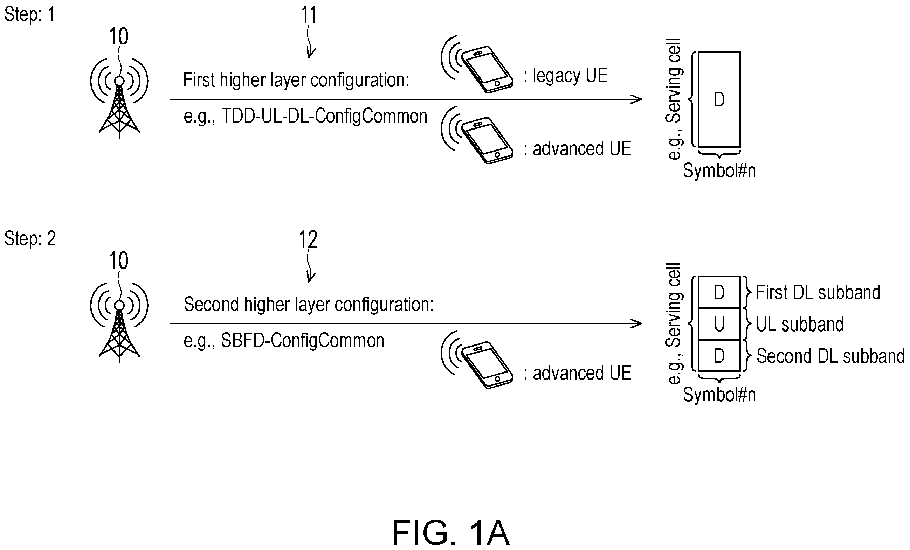

See FIG. 1A, which shows a schematic diagram of implementing the concept of SBFD. At Step 1 of FIG. 1A, the network device 10 (e.g., a base station such as gNB) may transmit a first higher layer configuration 11 (also referred to as a first configuration) to the legacy UEs and the advanced UEs, wherein the legacy UEs may be the UEs uncapable of using SBFD resources to transmit/receive signals, and the advanced UE (which can also be referred to as an SBFD aware UE) may be the UEs capable of using SBFD resources to transmit/receive signals.

In FIG. 1A, the first higher layer configuration 11 may be, for example, the signalling of "TDD-UL-DL-ConfigCommon", which may configure a particular resource (referred to as Symbol#n in FIG. 1A, wherein n is an index of the corresponding resource (e.g., a symbol or a slot)) to be DL (which is represented by "D"). In this case, the legacy UE may perform data reception with Symbol#n.

In addition, at Step 2 of FIG. 1A, the network device 11 may further transmit a second higher layer configuration 12 (also referred to as a second configuration), wherein the second higher layer configuration 12 may only be processed by the advanced UE.

In FIG. 1A, the second higher layer configuration 12 may be, for example, the signalling of "SBFD-ConfigCommon", which may further configure Symbol#n as SBFD resources, such as the first DL subband, the UL subband, and the second DL subband illustrated in FIG. 1A.

In the scenario of FIG. 1A, the advanced UE may be understood as being semistatically configured with a UL subband in a SBFD symbol configured as DL in TDD-UL-DL-ConfigCommon. In this case, the advanced UE may need to follow some principles: (1) UL transmissions within UL subband may be allowed in the symbol; (2) UL transmissions outside UL subband may not be allowed in the symbol; (3) Frequency locations of UL subband(s) may be known to the advanced UE, wherein the frequency location of UL subband(s) could be explicitly indicated or implicitly derived (4) Frequency locations of DL subband(s) may be known to the advanced UE, wherein the frequency location of DL subband(s) could be explicitly indicated or implicitly derived; (5) the DL receptions within DL subband(s) may be allowed in the symbol; (6) the DL receptions outside DL subband(s) may not be allowed in the symbol.

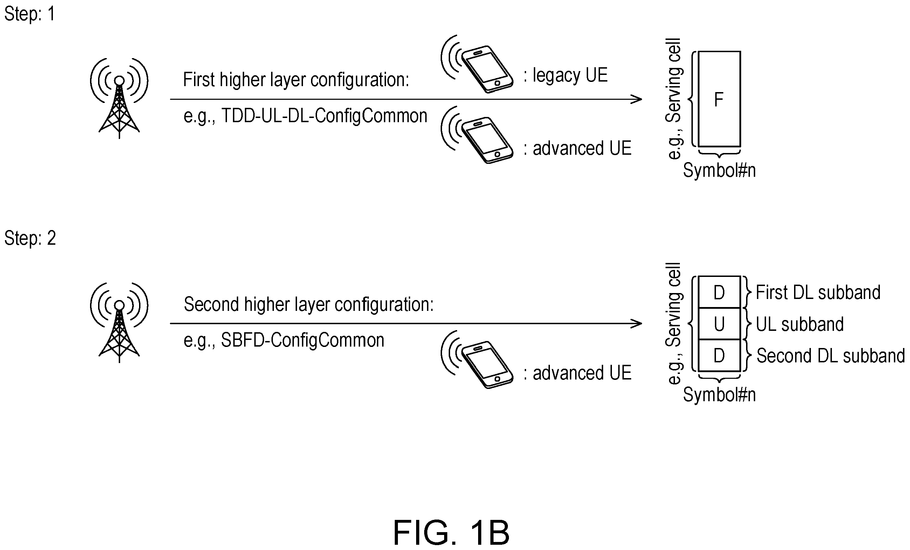

See FIG. 1B, which shows another schematic diagram of implementing the concept of SBFD. In FIG. 1B, the illustrated scenario is almost the same as the scenario shown in Fig. 1A, except for the first higher layer configuration 11 from the network device 11 may configure Symbol#n to be flexible (which is represented by "F"), which means that the legacy UE may perform data transmission or data reception with Symbol#n.

Next, same as FIG. 1A, the network device 11 in FIG. 1B may further transmit the second higher layer configuration 12 for further configuring Symbol#n as SBFD resources, and the associated details may be referred to the descriptions of FIG. 1A.

In some other cases, the network device 11 may also transmit the first higher layer configuration 11 to configure Symbol#n to be UL (which is represented by "U"), but the disclosure is not limited thereto.

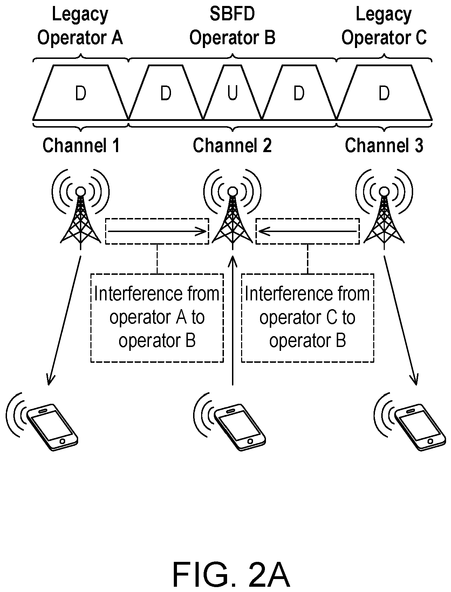

See FIG. 2A, which shows a first schematic diagram of a possible interference issue while implementing the SBFD technology.

In FIG. 2A, there may be legacy operators A and C, and an SBFD operator B, wherein the operator A, operator B and operator C may not share the information of, for example, the TDD configuration, DL transmission (Tx) beam, with each other.

In this case, the interference from operator A to operator B and the interference from operator C to operator B may be introduced, and these kinds of interferences may be referred to as the adjacent channel interference or cross link interference.

For dealing with these interferences, the gNB may share the TDD configuration (UL and DL slots information) with each other. Alternatively, the operator B may disable SBFD operation, and may fall back to legacy operation, e.g., half duplex TDD mode operation.

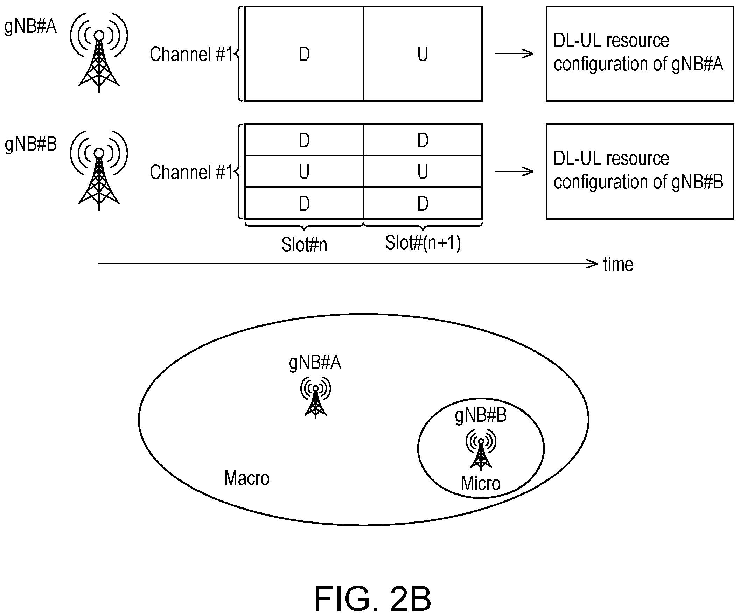

See FIG. 2B, which shows a second schematic diagram of a possible interference issue while implementing the SBFD technology.

In FIG. 2B, the gNB#A and gNB#B may belong to the same operator, which allows them to share the TDD configuration (UL and DL slots information) with each other. In addition, the gNB#A may correspond to the macro cell, and the gNB#B may correspond to the micro cell within this macro cell.

In the scenario of FIG. 2B, the DL-UL resource configurations of gNB#A and gNB#B on Channel#1 at different time periods (e.g., slot#(n) and slot#(n+1)) may be exemplarily configured as shown.

Since gNB#A and gNB#B may use the same channel at the same slot, the cochannel interference may be introduced therebetween.

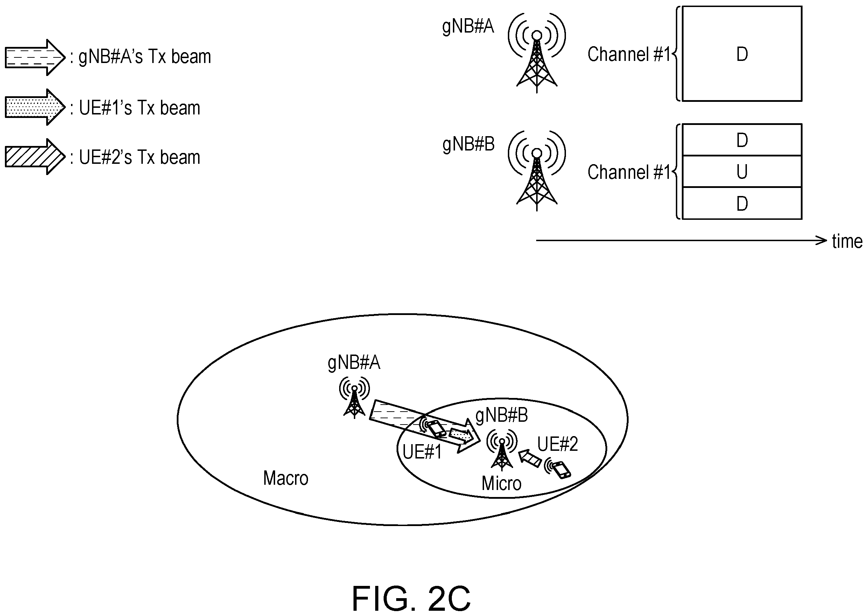

See FIG. 2C, which shows a third schematic diagram of a possible interference issue while implementing the SBFD technology.

In FIG. 2C, the gNB#A and gNB#B may belong to the same operator, which allows them to share DL Tx beam with each other. In addition, the gNB#A may correspond to the macro cell, and the gNB#B may correspond to the micro cell within this macro cell.

In the scenario of FIG. 2C, UE#1 and UE#2 may use their corresponding Tx beams for transmission. However, since the Tx beam of UE#1 may not be isolated from the Tx beam of gNB#A, gNB#B may switch SBFD resource to all DL resource for UE#1.

On the other hand, since the Tx beam of UE#2 is isolated from the Tx beam of gNB#A, gNB#B may keep SBFD resource for UE#2.

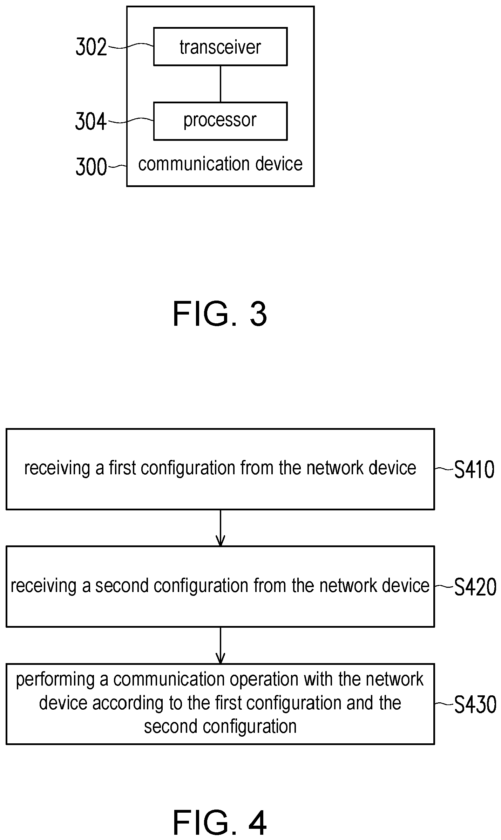

See FIG. 3, which shows a functional block diagram of communication device according to an embodiment of the disclosure.

In FIG. 3, the communication device 300 includes a transceiver 302 and a processor 304. The transceiver 302 may be configured for transmitting and receiving signals from other devices within a coverage area thereof. The transceiver 302 is capable of performing analog to digital signal conversion (ADC), digital to analog signal conversion (DAC), modulation, demodulation, signal amplification, low-pass filtering, and bandpass filtering. For example, the transceiver 302 is configured to provide information on a received signal to the processor 304, modulating data received from the processor 304 into a modulated signal, and transmitting the modulated signal to other devices.

In some embodiments, the communication device 300 may further include other elements, such as an antenna module for implementing the aforementioned functions of the transceiver 302 and the processor 304.

The processor 304 may be coupled with the transceiver 302, and the processor 304 may be, for example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like.

In the embodiments of the disclosure, the communication device 300 can be used to implement devices such as UE (e.g., the advanced UE) and/or the network device (e.g., gNB and/or other types of base stations).

In the embodiments of the disclosure, the transmissions/receptions of the UE may be performed by the processor of the UE controlling the transceiver of the UE.

In the following discussions, unless specifically specified as legacy UE, the UE would be assumed to be an advanced UE for brevity.

See FIG. 4, which shows a flow chart of the method for setting SBFD resource according to an embodiment of the disclosure. The method of this embodiment may be executed by the (advanced) UE of the disclosure, and the details of each step in FIG. 4 will be described below.

In step S410, the UE receives a first configuration from the network device, wherein the first configuration indicates a plurality of transmission directions (e.g., DL, UL, and/or flexible) for a time period. In the embodiment, the first configuration may be, for example, the first higher layer configuration 11 in FIG. 1A (e.g, the signaling of "TDD-UL-DL-ConfigCommon"), but the disclosure is not limited thereto.

In one embodiment, the first configuration includes a first pattern and a subcarrier spacing, wherein the first pattern indicates a beginning part, a middle part, and an end part of the time period.

In one embodiment, the beginning part of the time period indicated by the first pattern may include at least one DL resource, the middle part of the time period indicated by the first pattern may include at least one flexible resource, and the end part of the time period indicated by the first pattern may include at least one UL resource.

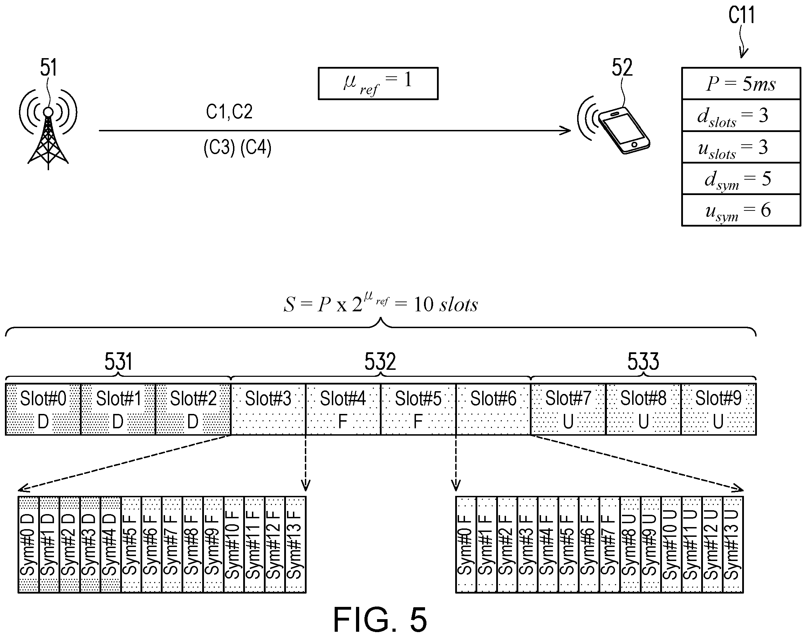

For better understanding, FIG. 5 would be used as an example, wherein FIG. 5 shows a schematic diagram of the transmission directions indicated by the first configuration according to an embodiment of the disclosure.

In the embodiment, the first configuration C1 (e.g., "TDD-UL-DL-ConfigCommon") sent from the network device 51 to the UE 52 may include a first pattern C11 and a subcarrier spacing *µ_{ref}*, wherein the first pattern C11 may indicate a beginning part 531, a middle part 532, and an end part 533 of the time period S.

In FIG. 5, the first pattern C11 may be a higher layer parameter pattern and may include pattern parameters such as a slot configuration period *P*, a number of slots *dₛₗₒₜ* with only downlink symbols, a number of downlink symbols *d_{sym}*, a number of slots *uₛₗₒₜ* with only uplink symbols, and a number of uplink symbols *u_{sym}*, and the exemplary values of the subcarrier spacing *µ_{ref}* and the above parameters are shown in FIG. 5, but the disclosure is not limited thereto.

In some embodiments, the slot configuration period P may be indicated by the field of "dl-UL-TransmissionPeriodicity" in the first pattern C11; the number of slots *dₛₗₒₜ* may be indicated by the field of "nrofDownlinkSlots" in the first pattern C11; the number of downlink symbols *d_{sym}* may be indicated by the field of "nrofDownlinkSymbols" in the first pattern C11; the number of slots *uₛₗₒₜ* may be indicated by the field of "nrofUplinkSlots" in the first pattern C11; the number of uplink symbols *u_{sym}* may be indicated by the field of "nrofUplinkSymbols" in the first pattern C11, but the disclosure is not limited thereto.

In the embodiment, since the slot configuration period P and the subcarrier spacing *µ_{ref}* are respectively assumed to be 5ms and 1, the time period S may be accordingly determined to include 10 slots (e.g., *P* × 2*^{µ_{ref}}*), which are referred to as Slot#0 to Slot#9 in FIG. 5.

In addition, since the number of slots *dₛₗₒₜ* with only downlink symbols is assumed to be 3, the beginning part 531 of the time period S may be determined to include the first three slots of the time period S (e.g., Slot#0 to Slot#2), and Slot#0 to Slot#2 would be DL resources/slots (indicated by "D"). On the other hand, since the number of slots *uₛₗₒₜ* with only uplink symbols is 3, the end part 533 of the time period S may be determined to include the last three slots of the time period S (e.g., Slot#7 to Slot#9), and Slot#7 to Slot#9 would be UL resources/slots (indicated by "U").

In the embodiment, each of Slot#0 to Slot#9 would be configured to include 14 symbols, which would be referred to as Sym#0 to Sym#13 of the corresponding slot (Sym stands for symbol).

In FIG. 5, since the number of downlink symbols *d_{sym}* is assumed to be 5, the first 5 symbols of the middle part 532 of the time period S would be determined to be DL symbols (e.g., Sym#0 to Sym#4 of Slot#3). On the other hand, since the number of uplink symbols *u_{sym}* is assumed to be 6, the last 6 symbols of the middle part 532 of the time period S would be determined to be UL symbols (e.g., Sym#8 to Sym#13 of Slot#6). In this case, other symbols in the middle part 532 of the time period S would be determined to be flexible resources/symbols (indicated by "F").

In one embodiment, the UE may be configured with one or more SBFD resource, wherein the SBFD resource may include at least one of a time duration, a frequency range and spatial information(s), e.g., quasi co-location (QCL) assumption(s), parameters, etc.

In the embodiment, the frequency range may include at least two different subband types, e.g., DL subband, UL subband or flexible subband, and each subband of the at least two different subband types may not be overlapped in frequency domain.

In one embodiment, the subband may be consist of 1 resource block (RB) or a set of consecutive RBs for the same transmission direction.

In one embodiment, the time duration could be in symbols, in slots or in milliseconds (msec). In one embodiment, if the time duration is equal to one symbol, it may be called as SBFD symbol, wherein the SBFD symbol may be referred to as an `S' symbol. In another embodiment, if the time duration is equal to one slot, it may be called as an SBFD slot, wherein the SBFD slot may be referred to as an 'S' slot.

From another perspective, in addition to the existing types of slots/symbols (e.g., the slots/symbols indicated by "D", "U", and/or "F"), the embodiments of the disclosure introduce a new type of slot/symbol, i.e., the slot/symbol indicated by "S", which represents the SBFD slot/symbol, but the disclosure is not limited thereto.

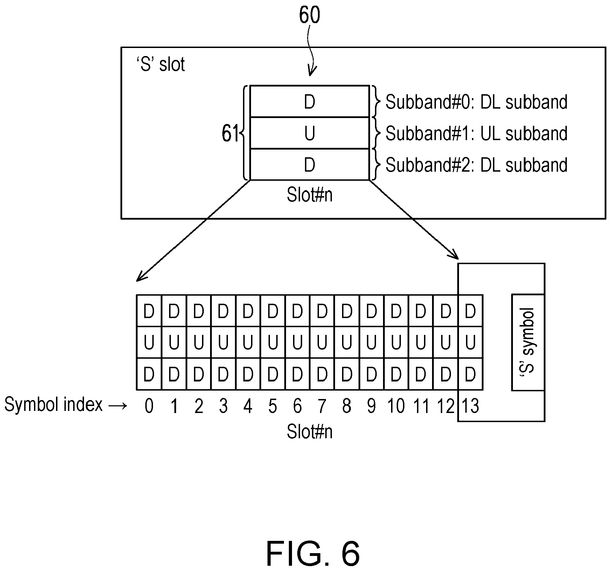

See FIG. 6, which shows a schematic diagram of configuring the SBFD resource according to an embodiment of the disclosure.

In FIG. 6, the SBFD resource 60 may be an SBFD slot including 14 SBFD symbols, but the disclosure is not limited thereto. In the embodiment, the SBFD resource 60 may include Subband#0 to Subband#2, which may respectively be DL subband, UL subband, and DL subband, and each of Subband#0 to Subband#2 may be consist of 1 RB or a set of consecutive RBs for the same transmission direction.

In the embodiment, the subbands included in the SBFD resource 60 may cover a frequency range 61 of the frequency domain, wherein the frequency domain 61 may correspond to a serving cell.

In the embodiment, the subbands included in the SBFD resource 60 indicated by the second configuration C2 in the frequency domain may include at least one DL subband (e.g., Subband#0 and Subband#2) and at least one UL subband (e.g., Subband#1).

In one embodiment, the frequency range 61 may be equal to a sum of a frequency domain length of the at least one DL subband and a frequency domain length of the at least one UL subband. For example, the frequency range 61 may be equal to the sum of the frequency domain length of Subband#0 to Subband#2 in FIG. 6.

In one embodiment, the at least one DL subband and the at least one UL subband are not overlapping with each other in the frequency domain. For example, the Subband#0 to Subband#2 in FIG. 6 are not overlapping with each other in the frequency domain.

In one embodiment, each of the at least one DL (e.g., Subband#0 and Subband#2) subband includes at least one first RB or a first set of consecutive RBs for a DL reception, and each of the at least one UL subband (e.g., Subband#1 in FIG. 6) includes at least one second RB or a second set of consecutive RBs for an UL transmission.

Referring back to FIG. 4, in step S420, the UE receives a second configuration C2 from the network device, wherein the second configuration C2 indicates at least one SBFD resource within the time period S.

In different embodiments, the second configuration C2 may include one or more SBFD setting, wherein the one or more SBFD setting may be applied to the first pattern C1 1 and/or the second pattern C12.

For example, in the embodiment where the first configuration C1 merely indicates the first pattern C1 (e.g., the scenario of FIG. 5A), the UE may perform, based on the SBFD setting, the following operations: (1) overwriting the at least one DL resource (e.g., one or more of DL resources/symbols in FIG. 5A) indicated by the first pattern C1 to a first SBFD resource; and (2) overwriting the at least one flexible resource (e.g., one or more of flexible resources/symbols in FIG. 5A) indicated by the first pattern C1 to a second SBFD resource. In one embodiment, the SBFD setting is not allowed to be used by the UE to overwrite the at least one uplink resource (e.g., one or more of UL resources/symbols in FIG. 5A) indicated by the first pattern C11.

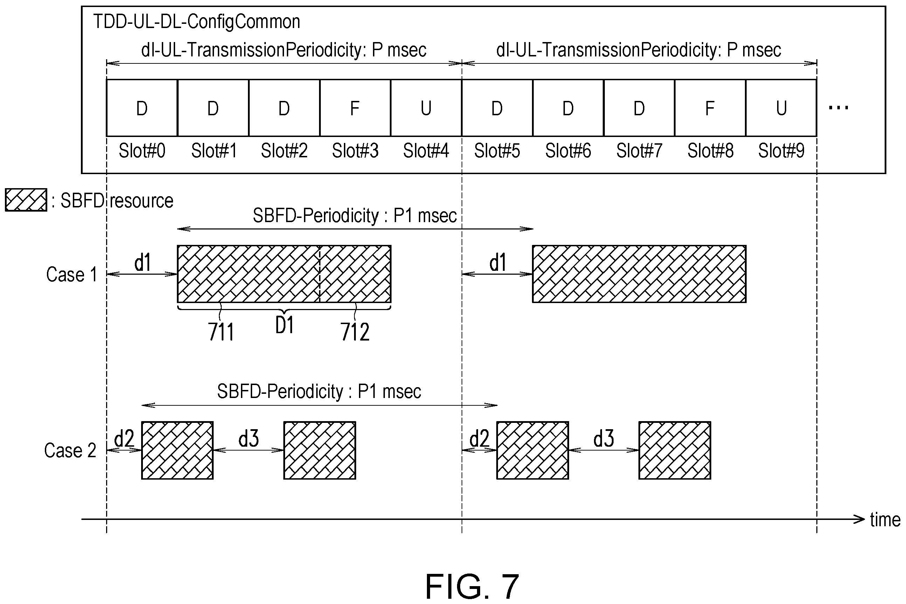

For better understanding, FIG. 7 would be used as an example, wherein FIG. 7 shows a schematic diagram of overwriting DL/flexible resource to SBFD resource according to an embodiment of the disclosure.

In one embodiment, the first configuration C1 may indicate a first periodicity of the time period S, and the second configuration C2 may indicate a second periodicity associated with the at least one SBFD resource. In one embodiment, the first periodicity is identical to the second periodicity, but the disclosure is not limited thereto.

In another embodiment, the first configuration C1 may indicate the first periodicity of the time period S, but the second configuration C2 may not indicate the second periodicity. In this case, the second periodicity may be determined as being the same as the first periodicity by default. From another perspective, in the case where the first configuration C1 indicates the first periodicity, the second periodicity of the at least one SBFD resource configured by the second configuration may be identical to the first periodicity.

In FIG. 7, the first configuration C1 (e.g., the signalling of "TDD-UL-DL-ConfigCommon") may indicate the parameter of "dl-UL-TransmissionPeriodicity" (e.g., the first periodicity) to be P msec (or 5 slots), and the transmission directions associated with Slot#0 to Slot#4 may be for example, DDDFU, and the transmission directions associated with Slot#5 to Slot#9 may also be, for example, DDDFU.

In the embodiment, the second configuration C2 (e.g., the signalling of "SBFD-ConfigCommon") may indicate the parameter of "SBFD-Periodicity" (e.g., the second periodicity) to be P1 msec (or 5 slots), but the disclosure is not limited thereto.

In Case 1 of FIG. 7, the DL resources of Slot#1 and Slot#2 may be overwritten, based on the second configuration C2, to be the first SBFD resource 711, and the flexible resources of Slot#3 may be overwritten, based on the second configuration C2, to be the first SBFD resource 712.

In one embodiment, the first SBFD resource 711 may be consecutive in a time domain, and the second SBFD resource 712 may also be consecutive in the time domain, but the disclosure is not limited thereto.

In Case 1 of FIG. 7, an end time of the first SBFD resource 711 may be aligned with a start time of the second SBFD resource 712.

In one embodiment, the SBFD setting may include an offset d1, and a start time of the first SBFD resource 711 is later than a start time of the beginning part of the time period by the offset d1. In Case 1 of FIG. 7, the start time of the first SBFD resource 711 may be later than a start time of Slot#0 by the offset d1.

In one embodiment, a start time of the first SBFD resource 711 may be aligned with a start time of the beginning part of the time period, which can be understood as modifying the offset d1 in Case 1 of FIG. 7 to be 0, but the disclosure is not limited thereto.

In Case 2, the SBFD setting may include offsets d2 and d3, wherein the offset d2 may be used to characterize the time difference between the start time of one SBFD resource and the start time of the beginning part of the time period, and the offset d3 may be used to characterize the time difference between different SBFD resources within the same time period, but the disclosure is not limited thereto.

In one embodiment, the subcarrier spacing *µ_{ref}* is applied to the first pattern C11 and the SBFD setting.

In one embodiment, the SBFD setting may include information for a time length D1, the time length D1 is equal to a sum of a time domain length of the first SBFD resource 711 and a time domain length of the second SBFD resource 712, but the disclosure is not limited thereto.

In the embodiments of the disclosure, the UE may be provided with a higher layer signalling (e.g., downlink control information (DCI), medium access control (MAC) control element (CE), etc.) that indicates one or more bit map indication for the SBFD resource configuration.

In one embodiment, the number of bits of the bit map indication may be associated with the number of slots within the considered time period.

In one embodiment, each bit of the bit map indication may be used to indicate whether a time duration may be applied for SBFD operation, wherein the time duration may be in symbols or in slots or in msec. For example, when a certain bit of the bit map indication is "1", it indicates the corresponding time duration (e.g., a slot, a symbol, or the like) is applied for SBFD operation. On the other hand, when a certain bit of the bit map indication is "0", it indicates the corresponding time duration is not applied for SBFD operation.

In one embodiment, a first bit of the bit map indication may be used to indicate a first time duration, and a second bit of the bit map indication may be used to indicate a second time duration, wherein the length of the first time duration may be the same as the length of the second time duration, and the first time duration may not be overlapped with the second time duration in time domain.

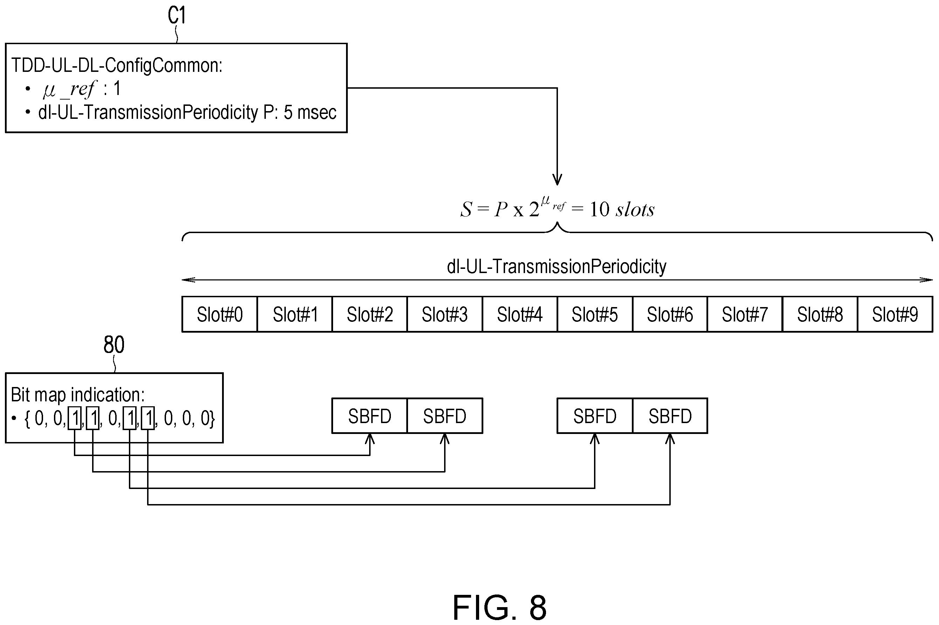

For better understanding, FIG. 8 would be used as an example, wherein FIG. 8 shows a schematic diagram of applying the bit map indication according to an embodiment of the disclosure.

In FIG. 8, it is assumed that the content of the considered first configuration C1 is the same as the first configuration C1 in FIG. 5A, and hence the length of the time period S would be 5 msec (indicated by the slot configuration period P (e.g., "dl-UL-TransmissionPeriodicity")), and the time period S would include 10 slots (e.g., Slot#0 to Slot#9).

In this case, since there are 10 slots in the time period S, the corresponding bit map indication 80 may include, for example, 10 bits, which respectively corresponds to Slot#0 to Slot#9.

In the example of FIG. 8, it is assumed that Slot#2, Slot#3, Slot#5, and Slot#6 are used as SBFD resources. In this case, the bits in the bit map indication 80 corresponding to Slot#2, Slot#3, Slot#5, and Slot#6 may be configured to be "1", and the bits in the bit map indication 80 corresponding to other slots of the time period S may be configured to be "0".

Accordingly, when the UE receives the bit map indication 80, the UE may determine only Slot#2, Slot#3, Slot#5, and Slot#6 in the time period S are used as SBFD resources, but the disclosure is not limited thereto.

In another embodiment, the time period S may be divided into multiple time durations, and the first configuration C1 may be used to indicate the corresponding structures of transmission directions.

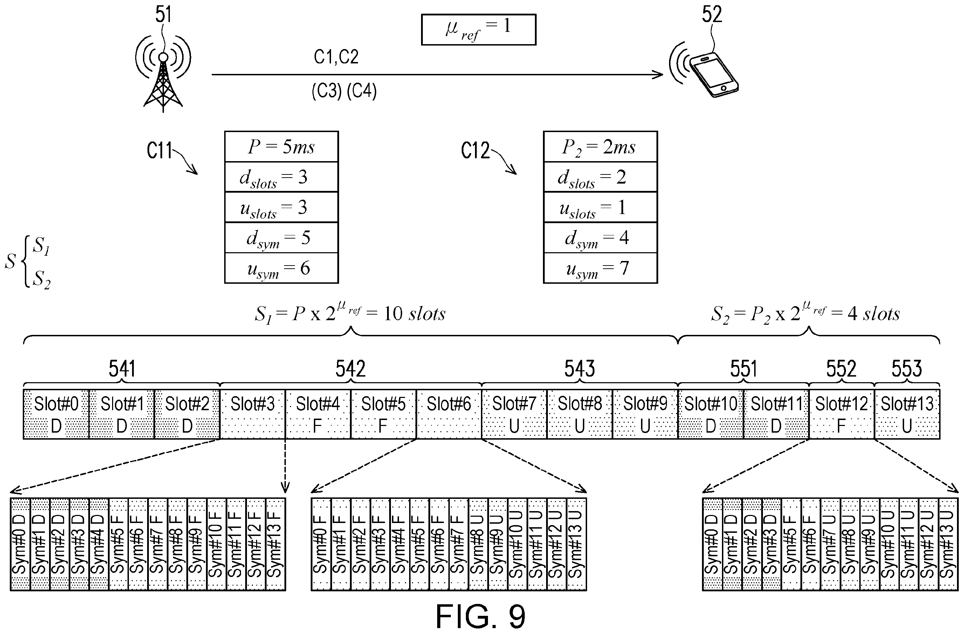

See FIG. 9, which shows another schematic diagram of the transmission directions indicated by the first configuration according to FIG. 5.

In the embodiment, the time period S may include a first time duration *S*₁ and a second time duration *S*₂. For example, an end time of the first time duration *S*₁ is aligned with a start time of the second time duration *S*₂, and the time period S is equal to a sum of the first time duration *S*₁ and the second time duration *S*₂.

In one embodiment, the first configuration C1 may include the first pattern C11, a second pattern C12, and the subcarrier spacing *µ_{ref}.* The first pattern C11 indicates a beginning part 541, a middle part 542, and an end part of 543 of the first time duration *S*₁.

In the embodiment, the beginning part 541 of the first time duration *S*₁ indicated by the first pattern C11 may include at least one first DL resource, the middle part 542 of the first time duration *S*₁ indicated by the first pattern C11 may include at least one first flexible resource, and the end part 543 of the first time duration *S*₁ indicated by the first pattern C11 may include at least one first UL resource.

In FIG. 9, the pattern parameters indicated by the first pattern C11 may be the same as FIG. 5A, and hence the beginning part 541, the middle part 542, and the end part of 543 of the first time duration *S*₁ may be the same as the beginning part 531, the middle part 532, and the end part 533 of the time period S in FIG. 5A, but the disclosure is not limited thereto.

In the embodiment, the second pattern C12 indicates a beginning part 551, a middle part 552, and an end part 553 of the second time duration *S*₂. For example, the beginning part 551 of the second time duration *S*₂ indicated by the second pattern C12 may include at least one second DL resource, the middle part 552 of the second time duration *S*₂ indicated by the second pattern C12 may include at least one second flexible resource, and the end part 553 of the second time duration *S*₂ indicated by the second pattern C12 may include at least one second UL resource.

In FIG. 9, the second pattern C12 may be a higher layer parameter pattern and may include pattern parameters such as a slot configuration period *P*₂, a number of slots *dₛₗₒₜ* with only downlink symbols, a number of downlink symbols *d_{sym}*, a number of slots *uₛₗₒₜ* with only uplink symbols, and a number of uplink symbols *u_{sym}*, and the exemplary values of the subcarrier spacing *µ_{ref}* and the above parameters are shown in FIG. 9, but the disclosure is not limited thereto.

In the embodiment, since the slot configuration period *P*₂ and the subcarrier spacing *µ_{ref}* are respectively assumed to be 2ms and 1, the second time duration *S*₂ may be accordingly determined to include 4 slots (e.g., *P*₂ × 2*^{µ_{ref}}*), which are referred to as Slot#10 to Slot#13 in FIG. 9.

In addition, since the number of slots *dₛₗₒₜ* indicated by the second pattern C12 is assumed to be 2, the beginning part 551 of the second time duration *S*₂ may be determined to include the first two slots of the second time duration *S*₂ (e.g., Slot#10 to Slot#11), and Slot#10 to Slot#11 would be DL resources/slots (indicated by "D"). On the other hand, since the number of slots *uₛₗₒₜ* is 1, the end part 553 of the second time duration *S*₂ may be determined to include the last one slot of the second time duration *S*₂ (e.g., Slot#13), and Slot#13 would be UL resource/slot (indicated by "U").

In the embodiment, each of Slot#10 to Slot#13 would be configured to include 14 symbols, which would be referred to as Sym#0 to Sym#13 of the corresponding slot.

In FIG. 9, since the number of downlink symbols *d_{sym}* is assumed to be 4, the first 4 symbols of the middle part 552 of the second time duration *S*₂ would be determined to be DL symbols (e.g., Sym#0 to Sym#3 of Slot#12). On the other hand, since the number of uplink symbols *u_{sym}* is assumed to be 7, the last 7 symbols of the middle part 552 of the second time duration *S*₂ would be determined to be UL symbols (e.g., Sym#7 to Sym#13 of Slot#12). In this case, other symbols in the middle part 552 of the second time duration *S*₂ would be determined to be flexible resources/symbols (indicated by "F").

In the embodiment, the UE 52 may also receive the second configuration C2 from the network device 51

In the scenario of FIG. 9, where there are multiple time durations within the time period S, the second configuration C2 may include one or more SBFD setting for the UE 52 to overwrite some of the resources as SBFD resources in one or more of the time durations accordingly.

In one embodiment, the second configuration C2 may include one SFBD setting applied to the first pattern C11 or the second pattern C12.

In this case, the UE 52 may overwrite the at least one first downlink resource (e.g., one or more of Slot#0 to Slot#2) indicated by the first pattern C11 to a first SBFD resource and overwrite the at least one first flexible resource (e.g., one or more of Slot#3 to Slot#6) indicated by the first pattern C11 to a second SBFD resource. Alternatively, the UE may overwrite the at least one second downlink resource (e.g., one or more of Slot#10 to Slot#1 1) indicated by the second pattern C12 to the first SBFD resource and overwrite the at least one second flexible resource (e.g., Slot#12) indicated by the second pattern C12 to the second SBFD resource.

In this case, the first SBFD resource and the second SBFD resource correspond to a reference time duration among the first time duration *S*₁ and the second time duration *S*₂. That is, if the considered reference time duration is the first time duration *S*₁, the SBFD setting may be used to overwrite one or more of Slot#0 to Slot#2 indicated by the first pattern C11 to the first SBFD resource and overwrite the Slot#3 to Slot#6 indicated by the first pattern C11 to the second SBFD resource. On the other hand, if the considered reference time duration is the second time duration *S*₂, the SBFD setting may be used to overwrite one or more of Slot#10 to Slot#1 1 indicated by the second pattern C12 to the first SBFD resource and overwrite the Slot#12 indicated by the second pattern C12 to the second SBFD resource.

In the embodiment, the SBFD setting is not allowed to be used to overwrite the at least one first uplink resource (e.g., Slot#7 to Slot#9) indicated by the first pattern C11 and the at least one second uplink resource (e.g., Slot#13) indicated by the second pattern C12.

In the embodiment, the first SBFD resource is consecutive in a time domain within the corresponding reference time duration, and the second SBFD resource is consecutive in the time domain within the corresponding reference time duration.

In the embodiment, an end time of the first SBFD resource is aligned with a start time of the second SBFD resource within the corresponding reference time duration.

In the embodiment, the first configuration C1 indicates a first periodicity of the time period S, wherein the first periodicity is equal to a sum of the first time duration *S*₁ and the second time duration *S*₂, the second configuration C2 indicates a second periodicity associated with the at least one SBFD resource, and the first periodicity is identical to the second periodicity.

In the embodiment, the subcarrier spacing *µ_{ref}* is applied to the first pattern C11, the second pattern C12, and the SBFD setting.

In the embodiment, a start time of the first SBFD resource is aligned with a start time of the beginning part of the corresponding reference time duration.

In the embodiment, the SBFD setting includes an offset, a start time of the first SBFD resource is later than a start time of the beginning part of the corresponding reference time duration by the offset.

In the embodiment, the SBFD setting includes information for a time length, wherein the time length is equal to a sum of a time domain length of the first SBFD resource and a time domain length of the second SBFD resource.

That is, in the embodiment where the second configuration C2 includes one SBFD setting, this SBFD setting may only be applied to one of the time durations in the time period S.

However, in some embodiments, the second configuration C2 may also include multiple SFBD settings respectively applied to the first pattern C11 or the second pattern C12.

For example, the second configuration C2 comprises a first SBFD setting and a second SBFD setting, wherein the first SBFD setting is applied to the first pattern C11, the second SBFD setting is applied to the second pattern C12.

In the embodiment, the UE 52 may use the first SBFD setting to overwrite the at least one first downlink resource (e.g., one or more of Slot#0 to Slot#2) indicated by the first pattern C11 to a first SBFD resource and overwrite the at least one first flexible resource (e.g., one or more of Slot#3 to Slot#6) indicated by the first pattern C11 to a second SBFD resource.

In addition, the UE 52 may use the second SBFD setting to overwrite the at least one second downlink resource (e.g., one or more of Slot#10 to Slot#11) indicated by the second pattern C12 to a third SBFD resource and overwrite the at least one second flexible resource (e.g., Slot#12) indicated by the second pattern C12 to a fourth SBFD resource.

In the embodiment, the first SBFD setting is not allowed to be used to overwrite the at least one first uplink resource (e.g., Slot#7 to Slot#9) indicated by the first pattern C11, and the second SBFD setting is not allowed to be used to overwrite the at least one second uplink resource (e.g., Slot#13) indicated by the second pattern C12.

In the embodiment, the first SBFD resource and the second SBFD resource are consecutive in a time domain within the first time duration, and the third SBFD resource and the fourth SBFD resource are consecutive in the time domain within the second time duration. In addition, an end time of the first SBFD resource is aligned with a start time of the second SBFD resource, and an end time of the third SBFD resource is aligned with a start time of the fourth SBFD resource.

In the embodiment, the first configuration C1 indicates a first periodicity of the time period S, wherein the first periodicity is equal to a sum of the first time duration *S*₁ and the second time duration *S*₂, the second configuration C2 indicates a second periodicity associated with the at least one SBFD resource, and the first periodicity is identical to the second periodicity.

In the embodiment, the subcarrier spacing *µ_{ref}* is applied to the first pattern C11, the second pattern C12, the first SBFD setting, and the second SBFD setting.

In the embodiment, a start time of the first SBFD resource is aligned with a start time of the beginning part of the first time duration *S*₁, and a start time of the third SBFD resource is aligned with a start time of the beginning part of the second time duration *S*₂.

In the embodiment, the first SBFD setting includes a first offset, and a start time of the first SBFD resource is later than a start time of the beginning part of the first time duration *S*₁ by the first offset.

In the embodiment, the second SBFD setting includes a second offset, and a start time of the third SBFD resource is later than a start time of the beginning part of the second time duration *S*₂ by the second offset.

In the embodiment, the first SBFD setting includes a first time length, and the first time length is equal to a sum of a time domain length of the first SBFD resource and a time domain length of the second SBFD resource.

In the embodiment, the second SBFD setting includes a second time length, and the second time length is equal to a sum of a time domain length of the third SBFD resource and a time domain length of the fourth SBFD resource.

Referring back to FIG. 4, in step S430, the UE 52 performs a communication operation with the network device 51 according to the first configuration C1 and the second configuration C2.

For example, since the UE 52 have overwritten one or more of the resources in the time period S as the corresponding SBFD resources based on the second configuration C2, the UE 52 may use these SBFD resources to communicate with the network device 51.

For better understanding, FIG. 6 and FIG. 7 would be used as an example, but the disclosure is not limited thereto. In FIG. 7, assuming that each slot in the first SBFD resource 711 and the second SBFD resource 712 are configured as the SBFD resource 60 in FIG. 6, the UE 52 may use Subband#0 and Subband#2 of each of Slot#1 to Slot#3 (and Slot#6 to Slot#8) to perform DL reception with the network device 51. In addition, the UE 52 may use Subband#1 of each of Slot#1 to Slot#3 (and Slot#6 to Slot#8) to perform UL transmission with the network device 51, but the disclosure is not limited thereto.

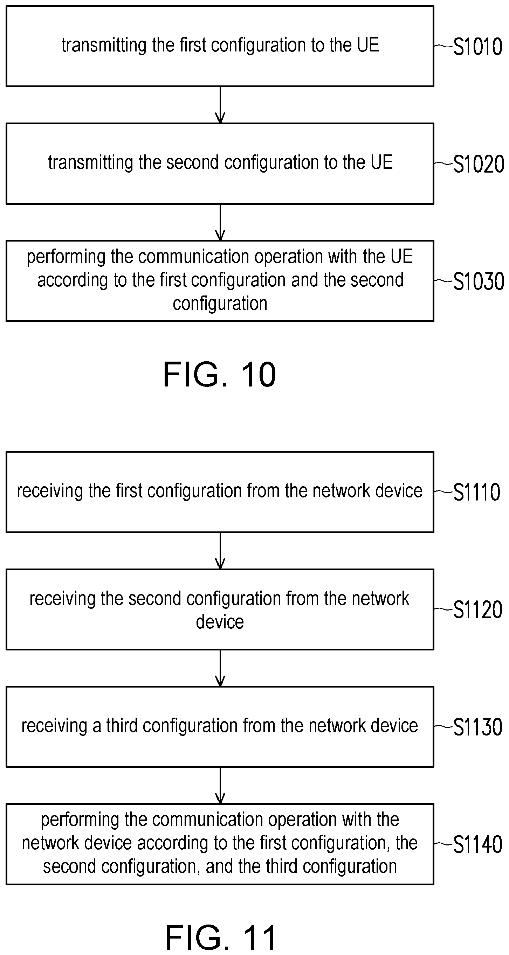

See FIG. 10, which shows a flow chart of the method for setting SBFD resource according to an embodiment of the disclosure. The method of this embodiment may be executed by the network device 51 of the disclosure.

In step S1010, the network device 51 transmits the first configuration C1 to the UE 52. In step S1020, the network device 51 transmits the second configuration C2 to the UE 52. In step S1030, the network device 51 performs the communication operation with the UE 52 according to the first configuration C1 and the second configuration C2. The details associated with steps S1010 to S1030 may be referred to the above descriptions, which would not be repeated herein.

See FIG. 11, which shows a flow chart of the method for setting SBFD resource according to an embodiment of the disclosure. The method of this embodiment may be executed by the UE 52 of the disclosure, and the details of each step in FIG.11 will be described below.

In step S1110, the UE 52 receives the first configuration C1 from the network device 51. In step S1120, the UE 52 receives the second configuration C2 from the network device 51. Details associated with steps S1110 and S1120 may be referred to the descriptions of steps S410 and S420 of FIG. 4, which would not be repeated herein.

As mentioned in the above, the first configuration C1 indicates multiple transmission directions within the time period S (e.g., the slots labelled with "D", "U", or "F" in FIG. 5).

In one embodiment, the transmission directions indicated by the first configuration C1 are applied to a frequency range (e.g., the frequency range 61 in FIG. 6), and the at least one SBFD resource indicated by the second configuration C2 in a frequency domain includes at least one DL subband (e.g., Subband#0 and Subband#2 in FIG. 6) and at least one UL subband (e.g., Subband#1 in FIG. 6).

In the embodiment, since an SBFD slot may include one or more SBFD symbols (e.g., the 'S' symbol), a new slot format may be introduced.

Specifically, a part of the conventional slot format table may be shown as Table 1.

**Table 1**

| | Symbol index | | | | | | | | | | | | | |
|---|---|---|---|---|---|---|---|---|---|---|---|---|---|---|
| Slot format | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | F | F | F | F | F | U | U | U | U |
| ... | ... | ... | ... | ... | ... | ... | ... | ... | ... | ... | ... | ... | ... | ... |

With the newly introduced SBFD symbol, a new slot format table may be exemplarily shown as Table 2.

**Table 2**

| | Symbol index | | | | | | | | | | | | | |
|---|---|---|---|---|---|---|---|---|---|---|---|---|---|---|
| slot format | 0 | 1 | 2 | 3 | 4 | 5 | 6 | 7 | 8 | 9 | 10 | 11 | 12 | 13 |
| 0 | S | S | S | S | S | S | S | S | S | S | S | S | S | S |
| 1 | D | D | D | D | S | S | S | S | S | S | F | F | U | U |
| ... | ... | ... | ... | ... | ... | ... | ... | ... | ... | ... | ... | ... | ... | ... |

In one embodiment, the network device 51 may provide the UE 52 with the new slot format by using, for example, the radio resource control (RRC), MAC CE, and/or DCI, but the disclosure is not limited thereto.

In one embodiment, the new slot format in Table 2 may include at least one `S' symbol, wherein the frequency range of the 'S' symbol may include multiple subbands.

In one embodiment, the frequency location of subbands of the at least one `S' symbol may be the same as the SBFD symbol configured by higher layer.

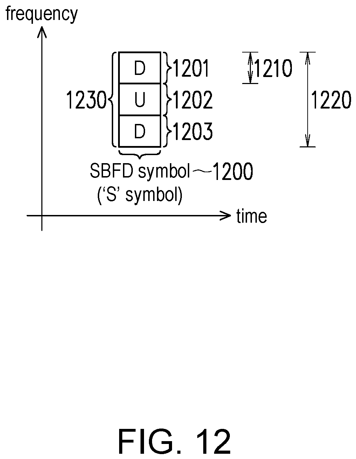

See FIG. 12, which shows a schematic diagram of an SBFD symbol according to an embodiment of the disclosure.

In FIG. 12, the SBFD symbol 1200 may include subbands 1201 to 1203, wherein the subband 1201 and 1203 may be DL subbands, and the subband 1202 may be an UL subband, but the disclosure is not limited thereto.

In the embodiment, the subbands 1201 to 1203 may have the frequency range 1230 corresponding to the serving cell.

Referring back to FIG. 11, in step S1130, the UE 52 receives a third configuration C3 from the network device 51, wherein the third configuration C3 indicates a DL bandwidth part (BWP) and a UL BWP. In step S1140, the UE 52 performs the communication operation with the network device 51 according to the first configuration C1, the second configuration C2, and the third configuration C3.

In one embodiment, the UE 52 may determine a first intersection between the UL BWP and each of the at least one UL subband as at least one UL usable RB. In addition, the UE 52 may determine a second intersection between the DL BWP and each of the at least one DL subband as at least one DL usable resource block.

In the embodiment, the UE 52 is allowed to perform an UL transmission by using the at least one UL usable RB, and the UE 52 is allowed to perform a DL reception by using the at least one DL usable RB.

In the embodiment, the UE 52 is not allowed to perform an UL transmission by using other UL resource other than the at least one UL usable RB, and the UE 52 is not allowed to perform a DL reception by using other DL resource other than the at least one DL usable RB.

In the embodiment, the DL BWP and the UL BWP have the same BWP identifier.

For example, assuming that the third configuration C3 indicates the BWP 1210 as a DL BWP, the UE 52 may determine the intersection of the BWP 1210 with the DL subbands among the subbands 1201 to 1203 as the DL usable RB, which means that the subband 1201 would be determined to be the DL usable RB. For another example, assuming that the third configuration C3 indicates the BWP 1220 as a DL BWP, the UE 52 may determine the intersection of the BWP 1220 with the DL subbands among the subbands 1201 to 1203 as the DL usable RB, which means that the subbands 1201 and 1203 would be determined to be the DL usable RB.

In other embodiments, assuming that the third configuration C3 indicates the BWP 1210 as a UL BWP, the UE 52 may determine the intersection of the BWP 1210 with the UL subbands among the subbands 1201 to 1203 as the UL usable RB, which means that none of the subbands 1201 to 1203 would be determined to be the UL usable RB. However, if the third configuration C3 indicates the BWP 1220 as a UL BWP, the UE 52 may determine the intersection of the BWP 1220 with the UL subbands among the subbands 1201 to 1203 as the UL usable RB, which means that the subbands 1202 would be determined to be the UL usable RB, but the disclosure is not limited thereto.

From another perspective, if the third configuration indicates BWP 1210 as a DL bandwidth and a UL bandwidth, and BWP 1210 is activated, the UE 52 may only perform DL reception on the SBFD symbol 1200. On the other hand, if the third configuration indicates BWP 1220 as a DL bandwidth and a UL bandwidth, and BWP 1220 is activated, the UE 52 may perform DL reception or UL transmission on the SBFD symbol 1200, but the disclosure is not limited thereto.

In one embodiment, if a higher layer signaling (e.g., the first configuration C1, "TDD-UL-DL-ConfigCommon" and/or "TDD-UL-DL-ConfigDedicated") has indicated that a set of symbols of a slot to be flexible symbols or when the higher layer signaling is not provided to the UE 52, the UE 52 may overwrite the set of symbols based on other signaling (e.g., DCI) from the network device 51.

For example, if a specific field (e.g., a Slot Format Indicator (SFI) index field) in DCI (e.g., DCI format 2_0) indicates the set of symbols of the slot as the SBFD symbol, the UE 52 may assume that the set of symbols of the slot are all SBFD symbols. In this case, the UE 52 may perform DL reception in the DL subband or UL transmission in the UL subband on the set of symbols of the slot.

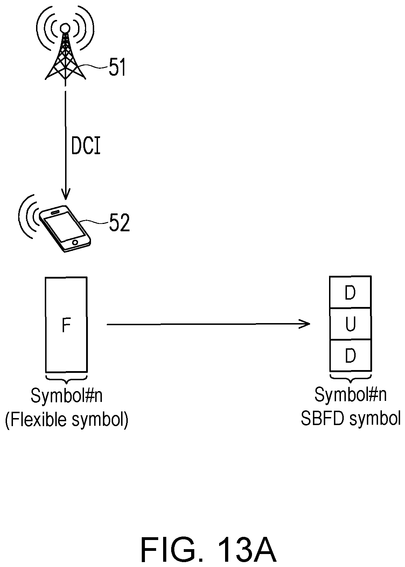

See FIG. 13A, which shows a schematic diagram of overwriting a flexible symbol according to an embodiment of the disclosure.

In FIG. 13A, it is assumed that Symbol#n is configured by, for example, the first configuration C1 as a flexible symbol. In this case, if the UE 52 determines the DCI from the network device 51 indicates that Symbol#n is an SBFD symbol, the UE 52 may overwrite Symbol#n to be an SBFD symbol. From another perspective, in response to determining that Symbol#n is also configured by the first configuration C1 as flexible, the UE 52 may ignore the first configuration C1 and configure Symbol#n by following the DCI.

In another embodiment, if a higher layer signaling (e.g., the first configuration C1, "TDD-UL-DL-ConfigCommon" and/or "TDD-UL-DL-ConfigDedicated") has indicated that a set of symbols of a slot to be DL symbols, the UE 52 may overwrite the set of symbols based on other signaling (e.g., DCI) from the network device 51.

For example, if a specific field (e.g., a Slot Format Indicator (SFI) index field) in DCI (e.g., DCI format 2_0) indicates the set of symbols of the slot as the SBFD symbol, the UE 52 may assume that the set of symbols of the slot are all SBFD symbols. In this case, the UE 52 may perform DL reception in the DL subband or UL transmission in the UL subband on the set of symbols of the slot.

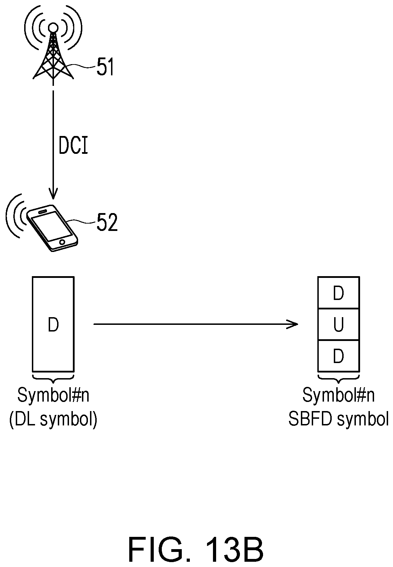

See FIG. 13B, which shows a schematic diagram of overwriting a DL symbol according to an embodiment of the disclosure.

In FIG. 13B, it is assumed that Symbol#n is configured by, for example, the first configuration C1 as a DL symbol. In this case, if the UE 52 determines the DCI from the network device 51 indicates that Symbol#n is an SBFD symbol, the UE 52 may overwrite Symbol#n to be an SBFD symbol. From another perspective, in response to determining that Symbol#n is also configured by the first configuration C1 as DL, the UE 52 may ignore the first configuration C1 and configure Symbol#n by following the DCI.

In another embodiment, in response to determining that t Symbol#n is also configured by the first configuration C1 as UL, the UE 52 may ignore the first configuration C1 and configure Symbol#n by following the DCI, but the disclosure is not limited thereto.

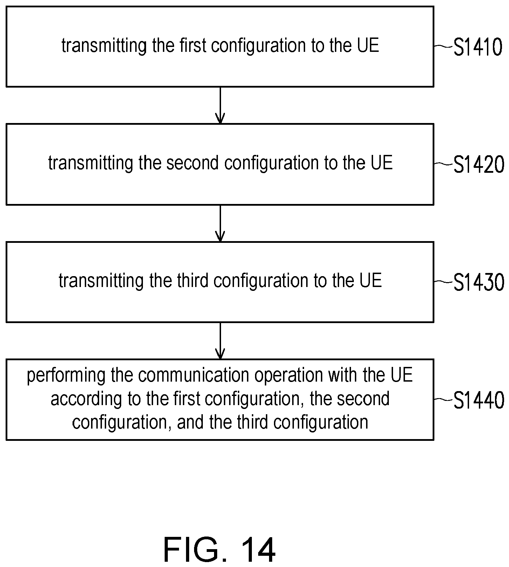

See FIG. 14, which shows a flow chart of the method for setting SBFD resource according to an embodiment of the disclosure. The method of this embodiment may be executed by the network device 51 of the disclosure.

In step S1410, the network device 51 transmits the first configuration C1 to the UE 52. In step S1420, the network device 51 transmits the second configuration C2 to the UE 52. In step S1430, the network device 51 transmits the third configuration C3 to the UE 52. In step S1440, the network device 51 performs the communication operation with the UE 52 according to the first configuration C1, the second configuration C2, and the third configuration C3. The details associated with steps S1410 to S1440 may be referred to the above descriptions, which would not be repeated herein.

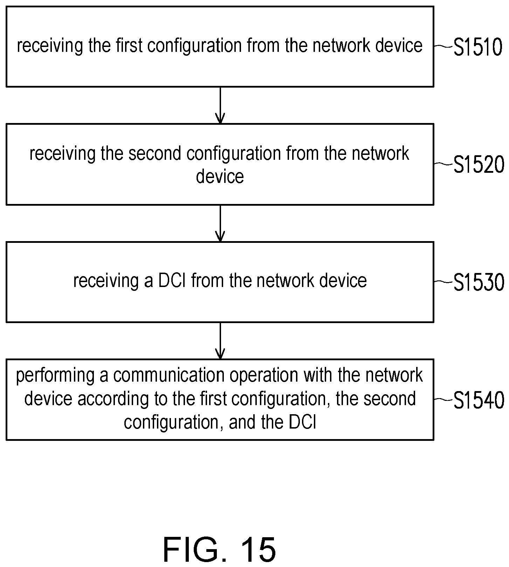

See FIG. 15, which shows a flow chart of the method for setting SBFD resource according to an embodiment of the disclosure. The method of this embodiment may be executed by the UE 52 of the disclosure, and the details of each step in FIG.15 will be described below.

In step S1510, the UE 52 receives the first configuration C1 from the network device 51. In step S1520, the UE 52 receives the second configuration C2 from the network device 51. Details associated with steps S1510 and S1520 may be referred to the descriptions of steps S410 and S420 of FIG. 4, which would not be repeated herein.

In step S1530, the UE 52 receives a DCI C4 from the network device 51, wherein the DCI C4 indicates at least one second transmission directions for at least one slot within the time period S. In step S1540, the UE 52 performs a communication operation with the network device 51 according to the first configuration C1, the second configuration C2, and the DCI C4.

In one embodiment, the network device 51 may use the DCI C4 (e.g., the DCI format 2_0) to modify the transmission directions of the resources indicated by the first configuration C1.

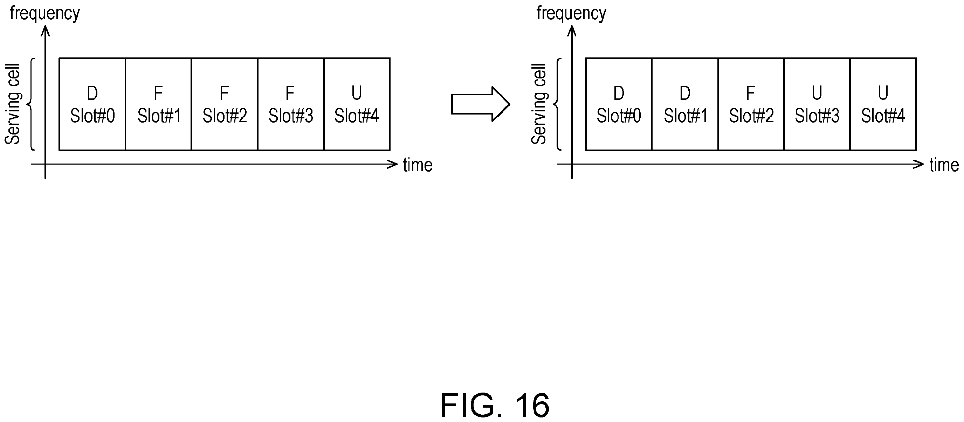

See FIG. 16, which shows a schematic of modifying the transmission directions by using DCI according to an embodiment of the disclosure.

In FIG. 16, the UE 52 may be assumed to determine, according to the first configuration C1, Slot#0 to Slot#4 to be D, F, F, F, U slots, respectively. In the embodiment, the UE 52 may further receive the DCI C4 (e.g., the DCI format 2_0) from the network device 51 and accordingly determine whether to adjust the transmission directions of one or more of Slot#0 to Slot#4.

For example, the UE 52 may determine whether to adjust the transmission directions of one or more of Slot#0 to Slot#4 based on the SFI-index field of the DCI C4 and the SFI table, wherein the SFI table may be exemplarily shown as Table 3.

**Table 3**

| SlotFormatCombinationID | SlotFormatCombination |
|---|---|
| 0 (bit 00) | 0 |
| 1 (bit 01) | 0, 1 |
| 2 (bit 10) | 0, 1, 2 |
| 3 (bit 11) | 0, 0, 2, 1 |
| ... | ... |

In one embodiment, if the SFI-index field of the DCI C4 indicates "11" (i.e., SlotFormatCombinationID is 3), the UE 52 may determine the SlotFormatCombination to be "0, 0, 2, 1". In this case, the UE 52 may perform: determining the first slot among Slot#0 to Slot#4 to be slot format 0; determining the second slot among Slot#0 to Slot#4 to be slot format 0; determining the third slot among Slot#0 to Slot#4 to be slot format 2; and determining the fourth slot among Slot#0 to Slot#4 to be slot format 1.

According to Table 3, the symbols in the slot having the slot format 0 are all DL symbols, the symbols in the slot having the slot format 1 are all UL symbols, and the symbols in the slot having the slot format 2 are all flexible symbols. Accordingly, Slot#0 to Slot#4 would be accordingly determined to be D, D, F, U, U slots, respectively.

In one embodiment, the DCI C4 is allowed to be used to overwrite the at least one flexible resource indicated by the first pattern C11. In addition, the DCI C4 is not allowed to be used to overwrite the at least one DL resource and the at least one UL resource indicated by the first pattern C11.

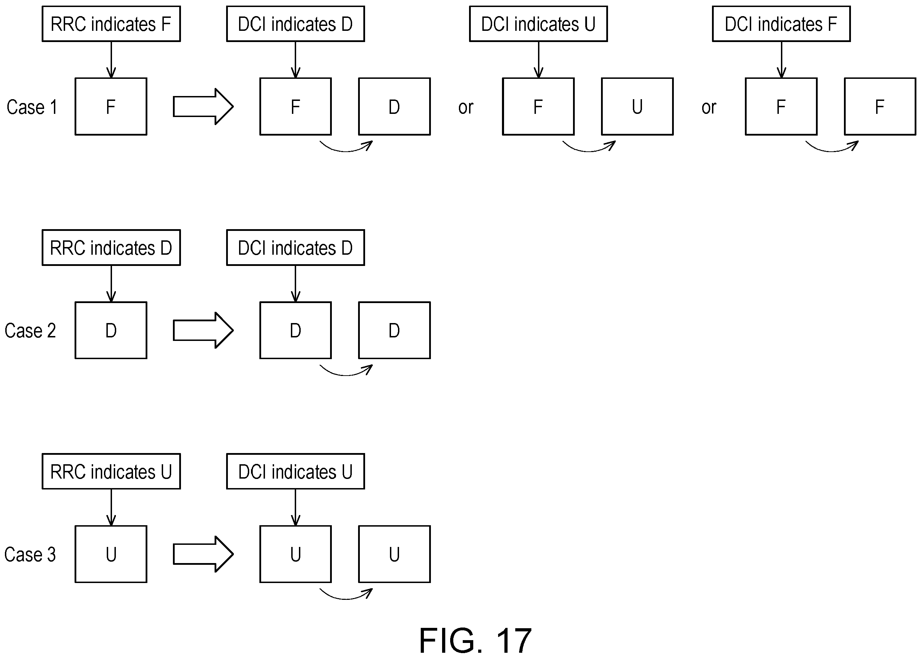

See FIG. 17, which shows several cases according to an embodiment of the disclosure.

In Case 1 of FIG. 17, if the RRC indicates a slot/symbol to be "F", the DCI C4 can be used to indicate/overwrite this slot/symbol to be "D", "U", or "F". In Case 2 of FIG. 17, if the RRC indicates a slot/symbol to be "D", the DCI C4 is not allowed to be used to indicate/overwrite this slot/symbol to be "U", or "F". In Case 3 of FIG. 17, if the RRC indicates a slot/symbol to be "U", the DCI C4 is not allowed to be used to indicate/overwrite this slot/symbol to be "D", or "F".

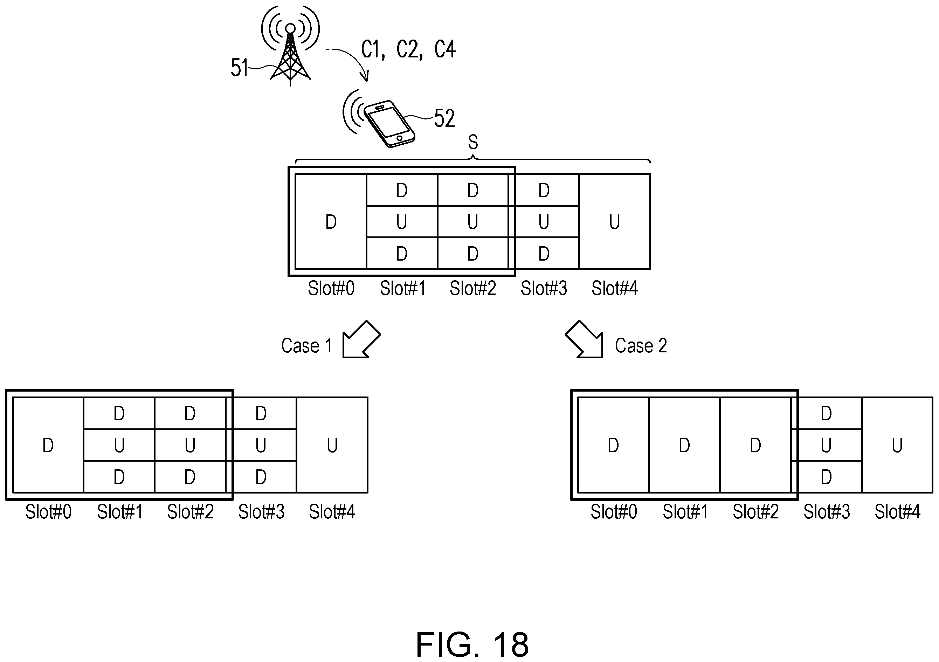

See FIG. 18, which shows a schematic diagram of configuring resources according to an embodiment of the disclosure.

In the embodiment, it is assumed that the time period S indicated by the first configuration C1 includes Slot#0 to Slot#4, and Slot#1 to Slot#3 have been overwritten by the UE 52 to be SBFD resources based on the second configuration C2.

In addition, the network device 51 may further provide the UE 52 with the DCI C4, which is assumed to be used to indicate Slot#0 to Slot#2 to be DL slots. For example, the SFI-index filed in the DCI C4 may provide 3 slot formats respectively for Slot#0 to Slot#2, but the disclosure is not limited thereto.

In different cases, the UE 52 may further configure (or assume/interpret) Slot#0 to Slot#2 indicated by the DCI C4 in different ways.

In one embodiment, in response to determining that a symbol within the at least one slot is configured by the second configuration C2 and the DCI C4, the UE 52 may ignore the DCI C4 and configure (or assume/interpret) the symbol by following the second configuration C2.

For example, in Case 1 of FIG. 18, since the symbols in Slot#1 to Slot#2 are configured by both of the second configuration C2 and the DCI C4, the UE 52 may ignore the DCI C4 and configure (or assume/interpret) the symbols in Slot#1 to Slot#2 by following the second configuration C2. In this case, the UE 52 will maintain the resource configurations for Slot#1 to Slot#2.

In another embodiment, in response to determining that a symbol within the at least one slot is configured by the second configuration C2 and the DCI C4, the UE 52 determines whether the at least one SBFD resource indicated by the second configuration C2 for the symbol is available based on a field included in the DCI C4.

In some embodiments, the field in the DCI C4 may be, for example, an available subband indicator field, which may be a one-bit field, but the disclosure is not limited thereto. In the embodiment, the available subband indicator field may be used to inform the UE 52 whether the UL subband of a `S' symbol within the one or more slot is available.

In one embodiment, in response to determining that the field has a first bit value (e.g., "1"), the UE 52 may determine that the at least one SBFD resource is available. On the other hand, in response to determining that the field has a second bit value (e.g., "0"), the UE 52 may determine that the at least one SBFD resource is not available.

In addition, in response to determining that the field has the second bit value, the UE 52 may further determine that at least one UL subband of the at least one SBFD resource has become at least one DL subband.

For example, in FIG. 18, since the symbols in Slot#1 to Slot#2 are configured by both of the second configuration C2 and the DCI C4, the UE 52 may determine whether the SBFD resources indicated by the second configuration C2 for the symbols in Slot#1 and Slot#2 are available based on the available subband indicator field included in the DCI C4.

In the embodiment where the available subband indicator field has the first bit value (e.g., "1"), the UE 52 may determine the symbols in the SBFD resources of Slot#1 and Slot#2 are available, such that the resource configurations for Slot#1 and Slot#2 can be maintained.

In the embodiment wherein the available subband indicator field has the second bit value (e.g., "0"), the UE 52 may determine the symbols in the SBFD resources of Slot#1 and Slot#2 are not available, such that the resource configurations for Slot#1 and Slot#2 cannot be maintained. Further, the UE 52 may determine the UL subbands in the SBFD resources of Slot#1 and Slot#2 to become DL subbands, which corresponds to the resource configuration of Case 2 in FIG. 18.

In one embodiment, in response to determining that the filed has the second bit value, the UE 52 may ignore the at least one SBFD resource indicated by the second configuration C2 and configure (or assume/interpret) the symbol by following the first configuration C1. That is, the UE 52 may determine the transmission directions of Slot#1 to Slot#2 based on the first configuration C1

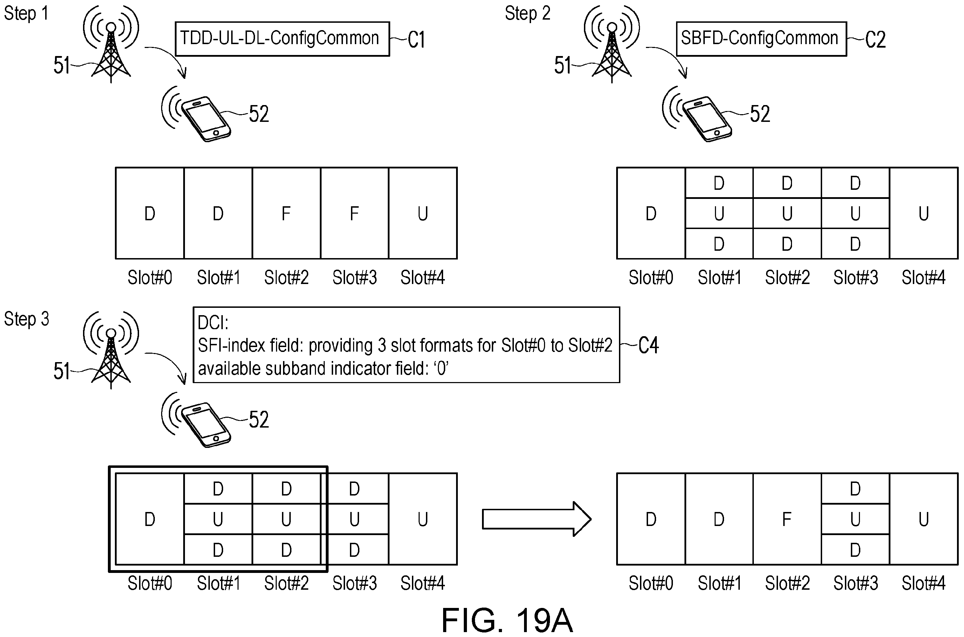

See FIG. 19A, which shows a schematic diagram of ignoring the second configuration and configuring the symbol by following the first configuration.

In Step 1 of FIG. 19A, the UE 52 may determine Slot#0 to Slot#4 to be D, D, F, F, U slots based on the first configuration C1.

In Step 2 of FIG. 19A, the UE 52 may overwrite Slot#1 to Slot#3 to be SBFD resources based on the second configuration C2, wherein the transmission directions for each subband within Slot#1 to Slot#3 may be exemplarily shown in FIG. 19A.

In Step 3 of FIG. 19A, the UE 52 may receive DCI C4 from the network device 51, wherein the DCI C4 may be assumed to have the SFI-index field providing 3 slot formats for Slot#0 to Slot#2 and the available subband indicator field having the second bit value (e.g., "0").

In the embodiment, since the available subband indicator field has the second bit value, the UE 52 may ignore the SBFD resources indicated by the second configuration C2 and configure (or assume/interpret) the symbols by following the first configuration C1.

Accordingly, the resulted resource configurations for Slot#1 to Slot#2 would be restored to be D, F slots as indicated by the first configuration C1.

In another embodiment, in response to determining that the filed has the second bit value, the UE 52 may ignore the at least one SBFD resource indicated by the second configuration C2 and configure (or assume/interpret) the symbol by following the DCI C4.

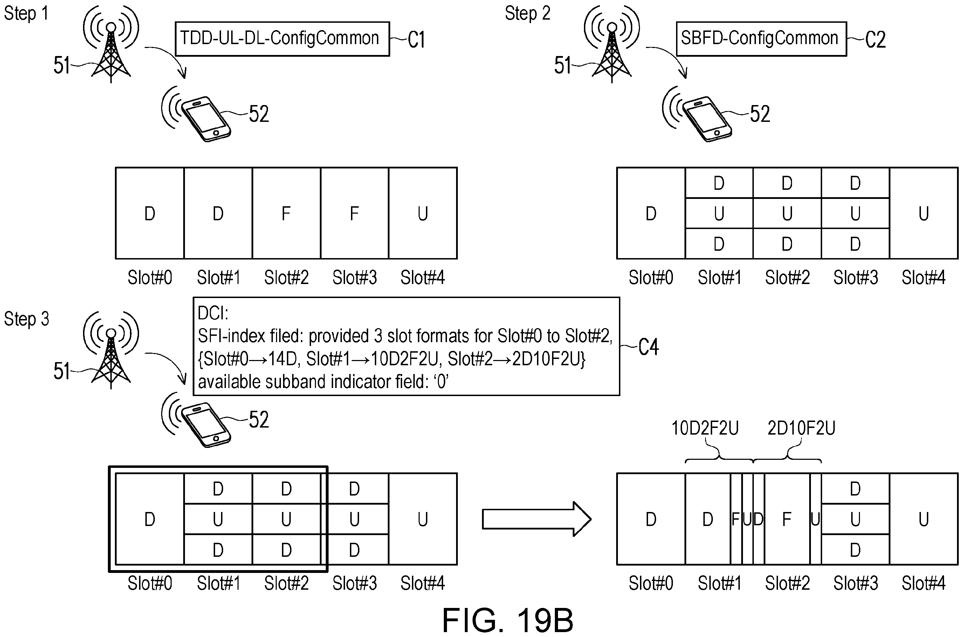

See FIG. 19B, which shows a schematic diagram of ignoring the second configuration and configuring the symbol by following the DCI.

In Step 1 of FIG. 19B, the UE 52 may determine Slot#0 to Slot#4 to be D, D, F, F, U slots based on the first configuration C1.

In Step 2 of FIG. 19B, the UE 52 may overwrite Slot#1 to Slot#3 to be SBFD resources based on the second configuration C2, wherein the transmission directions for each subband within Slot#1 to Slot#3 may be exemplarily shown in FIG. 19B.

In Step 3 of FIG. 19B, the UE 52 may receive DCI C4 from the network device 51, wherein the DCI C4 may be assumed to have the SFI-index field providing 3 slot formats for Slot#0 to Slot#2 and the available subband indicator field having the second bit value (e.g., "0").

In the embodiment, the slot format for Slot#0 may be specifically configured as "14D", which means that Slot#0 sequentially includes 14 DL symbols. In addition, the slot format for Slot#1 may be specifically configured as "10D2F2U", which means that Slot#1 sequentially includes 10 DL symbols, 2 flexible symbols, and 2 UL symbols. Likewise, the slot format for Slot#2 may be specifically configured as "2D10F2U", which means that Slot#2 sequentially includes 2 DL symbols, 10 flexible symbols, and 2 UL symbols.

In the embodiment, since the available subband indicator field has the second bit value, the UE 52 may ignore the SBFD resources indicated by the second configuration C2 and configure (or assume/interpret) the symbols by following the DCI C4.

Accordingly, the resulted resource configurations for the symbols in Slot#1 to Slot#2 would respectively be "10D2F2U" and "2D10F2U" as indicated by the DCI C4.

In other embodiments, the available subband indicator field in DCI C4 may be a multi-bit field. For example, the available subband indicator field may include a first bit corresponding to the UL subband and a second bit corresponding to the DL subband, wherein each of the first bit and the second bit may have the first bit value (e.g., "1") or the second bit value (e.g., "0").

In different embodiments, the available subband indicator field with different bit combinations may be used to inform the UE whether the UL subband and DL subband of a 'S' symbol within the one or more slots is available.

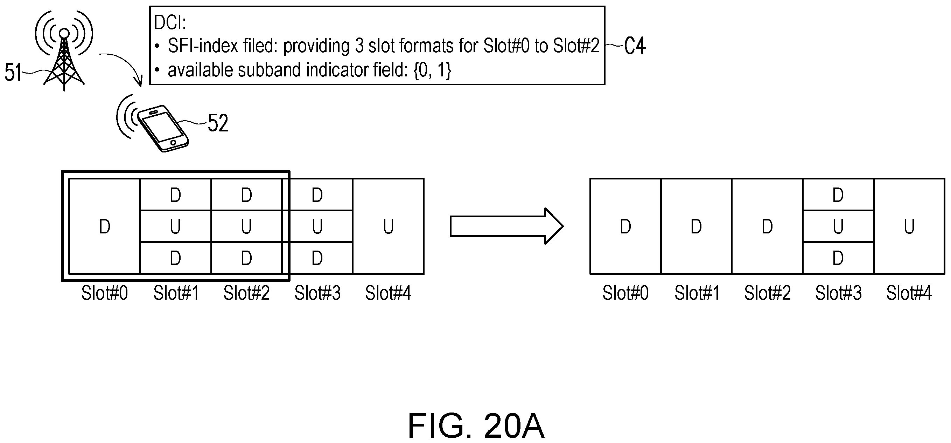

See FIG. 20A, which shows a schematic diagram where the UL subbands are changed to be DL subbands according to an embodiment of the disclosure.

In FIG. 20A, it is assumed that the SFI-index field of the DCI C4 provides 3 slot formats respectively for Slot#0 to Slot#2, and the available subband indicator field has the bit combination of {0, 1}.

In this case, since the first bit of the available subband indicator field is "0" (e.g., the second bit value), the UE 52 changes UL subbands in Slot#1 to Slot#2 to be DL subbands. In addition, since the second bit of the available subband indicator field is "1" (e.g., the first bit value), the UE 52 maintains DL subbands in Slot#1 to Slot#2 as DL subbands.

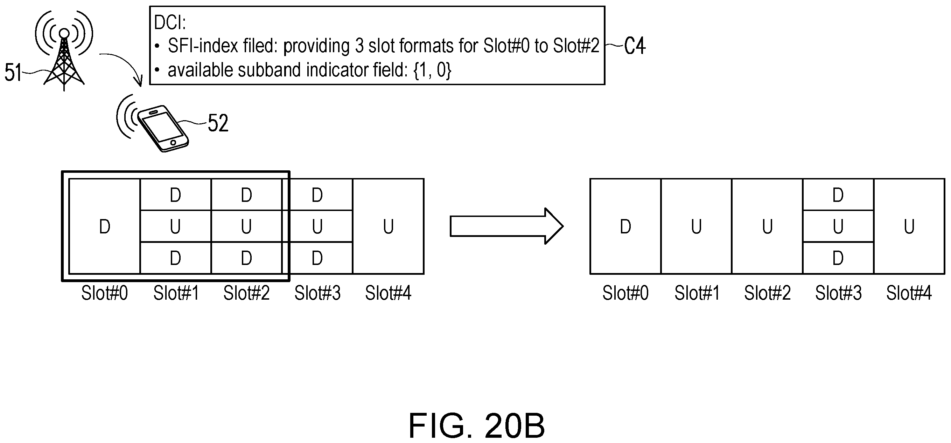

See FIG. 20B, which shows a schematic diagram where the DL subbands are changed to be UL subbands according to an embodiment of the disclosure.

In FIG. 20B, it is assumed that the SFI-index field of the DCI C4 provides 3 slot formats respectively for Slot#0 to Slot#2, and the available subband indicator field has the bit combination of {1, 0}.

In this case, since the first bit of the available subband indicator field is "1" (e.g., the first bit value), the UE 52 maintains UL subbands in Slot#1 to Slot#2 as UL subbands. In addition, since the second bit of the available subband indicator field is "0" (e.g., the second bit value), the UE 52 changes DL subbands in Slot#1 to Slot#2 to be UL subbands.

In one embodiment, in response to determining that the available subband indicator field is {0, 0}, the UE 52 may ignore the at least one SBFD resource indicated by the second configuration C2 and configure (or assume/interpret) the symbol by following the first configuration C1. That is, the UE 52 may determine the transmission directions of Slot#1 to Slot#2 based on the first configuration C1.

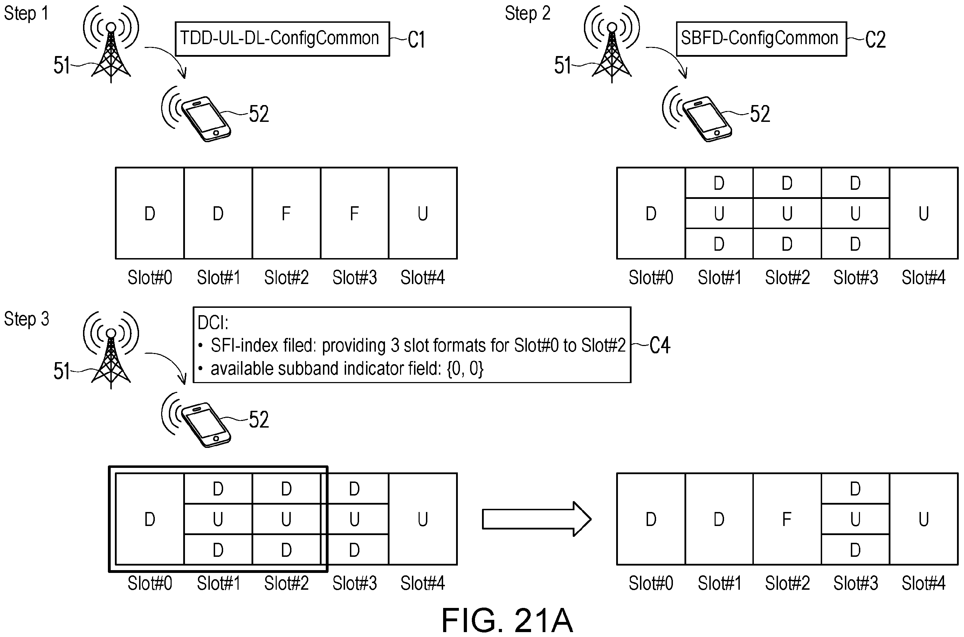

See FIG. 21A, which shows a schematic diagram of ignoring the second configuration and configuring the symbol by following the first configuration.

In Step 1 of FIG. 21A, the UE 52 may determine Slot#0 to Slot#4 to be D, D, F, F, U slots based on the first configuration C1.

In Step 2 of FIG. 21A, the UE 52 may overwrite Slot#1 to Slot#3 to be SBFD resources based on the second configuration C2, wherein the transmission directions for each subband within Slot#1 to Slot#3 may be exemplarily shown in FIG. 21A.

In Step 3 of FIG. 21A, the UE 52 may receive DCI C4 from the network device 51, wherein the DCI C4 may be assumed to have the SFI-index field providing 3 slot formats for Slot#0 to Slot#2 and the available subband indicator field having the bit combination of {0, 0}.

In the embodiment, since the available subband indicator field has the bit combination of {0, 0}, the UE 52 may ignore the SBFD resources indicated by the second configuration C2 and configure (or assume/interpret) the symbols by following the first configuration C1.

Accordingly, the resulted resource configurations for Slot#1 to Slot#2 would be restored to be D, F slots as indicated by the first configuration C1.

In another embodiment, in response to determining that the available subband indicator field is {0, 0}, the UE 52 may ignore the at least one SBFD resource indicated by the second configuration C2 and configure (or assume/interpret) the symbol by following the DCI C4.

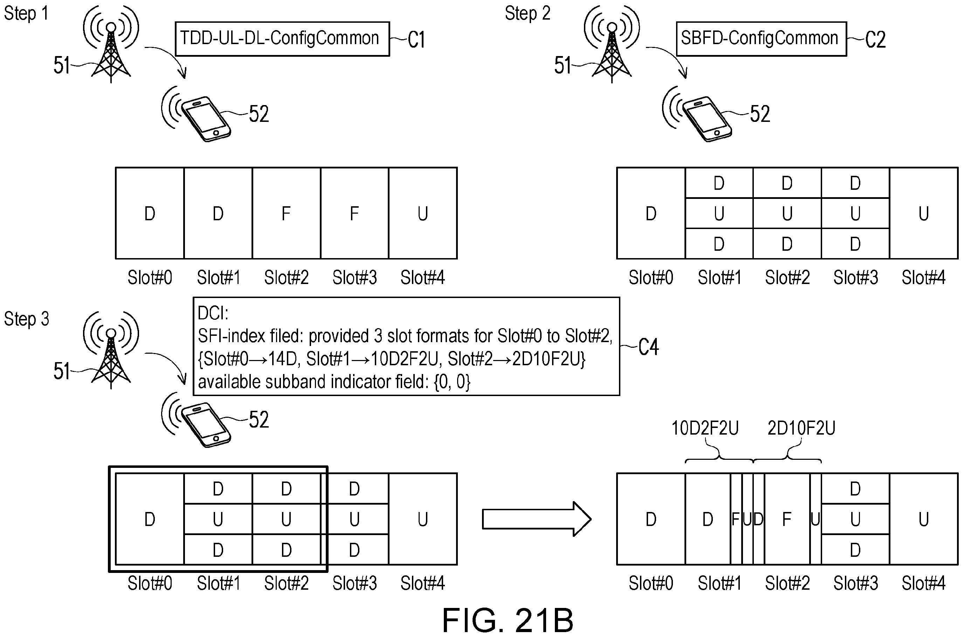

See FIG. 21B, which shows a schematic diagram of ignoring the second configuration and configuring the symbol by following the DCI.

In Step 1 of FIG. 21B, the UE 52 may determine Slot#0 to Slot#4 to be D, D, F, F, U slots based on the first configuration C1.

In Step 2 of FIG. 21B, the UE 52 may overwrite Slot#1 to Slot#3 to be SBFD resources based on the second configuration C2, wherein the transmission directions for each subband within Slot#1 to Slot#3 may be exemplarily shown in FIG. 21B.

In Step 3 of FIG. 21B, the UE 52 may receive DCI C4 from the network device 51, wherein the DCI C4 may be assumed to have the SFI-index field providing 3 slot formats for Slot#0 to Slot#2 and the available subband indicator field having the bit combination of {0, 0}.

In the embodiment, the slot format for Slot#0 may be specifically configured as "14D", which means that Slot#0 sequentially includes 14 DL symbols. In addition, the slot format for Slot#1 may be specifically configured as "10D2F2U", which means that Slot#1 sequentially includes 10 DL symbols, 2 flexible symbols, and 2 UL symbols. Likewise, the slot format for Slot#2 may be specifically configured as "2D10F2U", which means that Slot#2 sequentially includes 2 DL symbols, 10 flexible symbols, and 2 UL symbols.

In the embodiment, since the available subband indicator field has the bit combination of {0, 0}, the UE 52 may ignore the SBFD resources indicated by the second configuration C2 and configure (or assume/interpret) the symbols by following the DCI C4.

Accordingly, the resulted resource configurations for the symbols in Slot#1 to Slot#2 would respectively be "10D2F2U" and "2D10F2U" as indicated by the DCI C4.

In some embodiments, the available subband indicator field may have multiple bits, wherein each a k-th bit (k is an index) in the available subband indicator field corresponds to k-th subband (referred to as Subband#k) of the SBFD resources.

In one embodiment, when the k-th bit in the available subband indicator field has the first bit value (e.g., "1"), the UE 52 may maintain the transmission direction of corresponding Subband#k as unchanged. In another embodiment, when the k-th bit in the available subband indicator field has the second bit value (e.g., "0"), the UE 52 may change the corresponding Subband#k from DL to UL or from UL to DL.

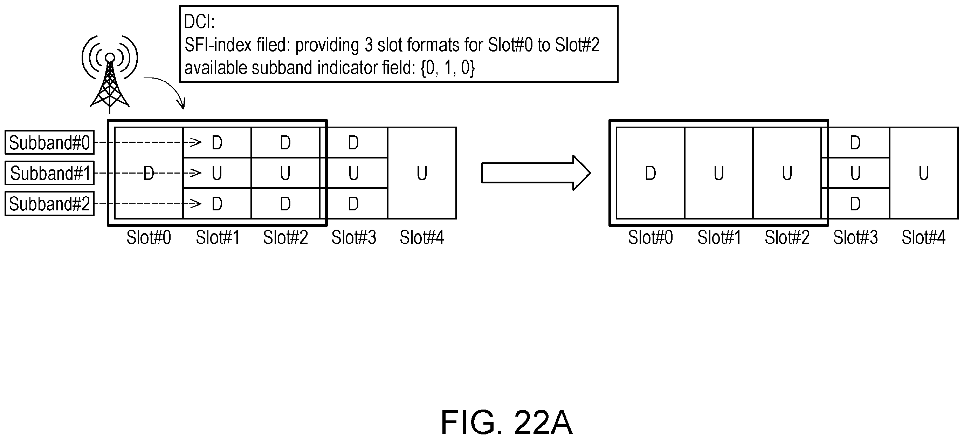

See FIG. 22A, which shows a schematic diagram where the DL subbands are changed to be UL subbands according to an embodiment of the disclosure.

In FIG. 22A, it is assumed that the SFI-index field of the DCI C4 provides 3 slot formats respectively for Slot#0 to Slot#2, and the available subband indicator field has the bit combination of {0, 1, 0}.

In this case, since the first bit and the third bit of the available subband indicator field are "0" (e.g., the second bit value), the UE 52 changes Subband#0 and Subband#2 in Slot#1 to Slot#2 (e.g., the SBFD slots) from DL subband to be UL subbands. In addition, since the second bit of the available subband indicator field is "1" (e.g., the first bit value), the UE 52 maintains Subband#1 in Slot#1 to Slot#2 as UL subbands.

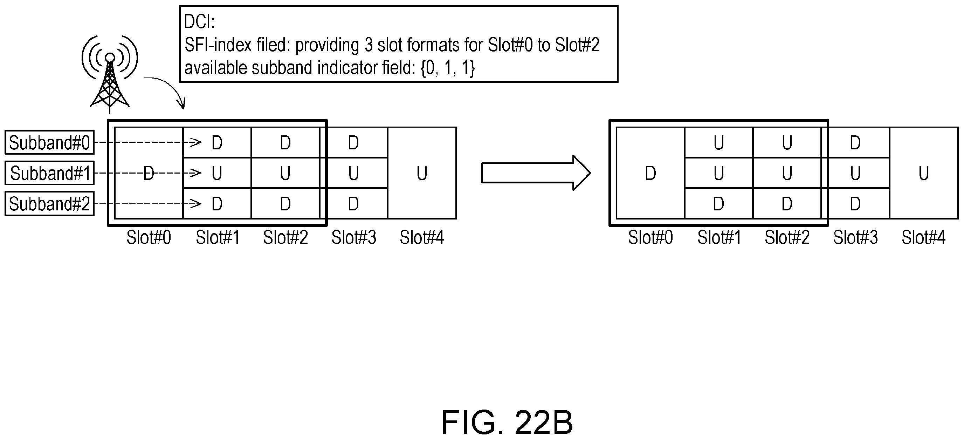

See FIG. 22B, which shows a schematic diagram where the DL subbands are changed to be UL subbands according to an embodiment of the disclosure.

In FIG. 22B, it is assumed that the SFI-index field of the DCI C4 provides 3 slot formats respectively for Slot#0 to Slot#2, and the available subband indicator field has the bit combination of {0, 1, 1}.

In this case, since the first bit of the available subband indicator field is "0" (e.g., the second bit value), the UE 52 changes Subband#0 in Slot#1 to Slot#2 (e.g., the SBFD slots) from DL subband to be UL subbands. In addition, since the second bit and the third bit of the available subband indicator field are "1" (e.g., the first bit value), the UE 52 maintains the transmission directions of corresponding Subband#1 and Subband#2 in Slot#1 to Slot#2 as unchanged.

In one embodiment, in response to determining that the available subband indicator field is {0, 0, 0}, the UE 52 may ignore the at least one SBFD resource indicated by the second configuration C2 and configure (or assume/interpret) the symbol by following the first configuration C1. That is, the UE 52 may determine the transmission directions of Slot#1 to Slot#2 based on the first configuration C1.

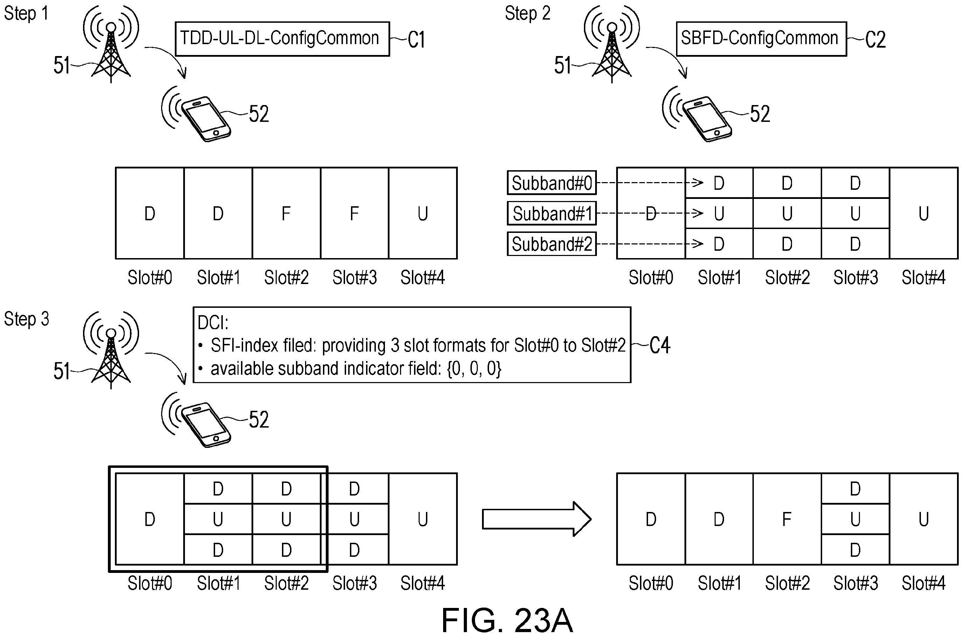

See FIG. 23A, which shows a schematic diagram of ignoring the second configuration and configuring the symbol by following the first configuration.

In Step 1 of FIG. 23A, the UE 52 may determine Slot#0 to Slot#4 to be D, D, F, F, U slots based on the first configuration C1.

In Step 2 of FIG. 23A, the UE 52 may overwrite Slot#1 to Slot#3 to be SBFD resources based on the second configuration C2, wherein the transmission directions for each subband within Slot#1 to Slot#3 may be exemplarily shown in FIG. 23A.

In Step 3 of FIG. 23A, the UE 52 may receive DCI C4 from the network device 51, wherein the DCI C4 may be assumed to have the SFI-index field providing 3 slot formats for Slot#0 to Slot#2 and the available subband indicator field having the bit combination of {0, 0, 0}.

In the embodiment, since the available subband indicator field has the bit combination of {0, 0, 0}, the UE 52 may ignore the SBFD resources indicated by the second configuration C2 and configure (or assume/interpret) the symbols by following the first configuration C1.

Accordingly, the resulted resource configurations for Slot#1 to Slot#2 would be restored to be D, F slots as indicated by the first configuration C1.

In another embodiment, in response to determining that the available subband indicator field is {0, 0, 0}, the UE 52 may ignore the at least one SBFD resource indicated by the second configuration C2 and configure (or assume/interpret) the symbol by following the DCI C4.

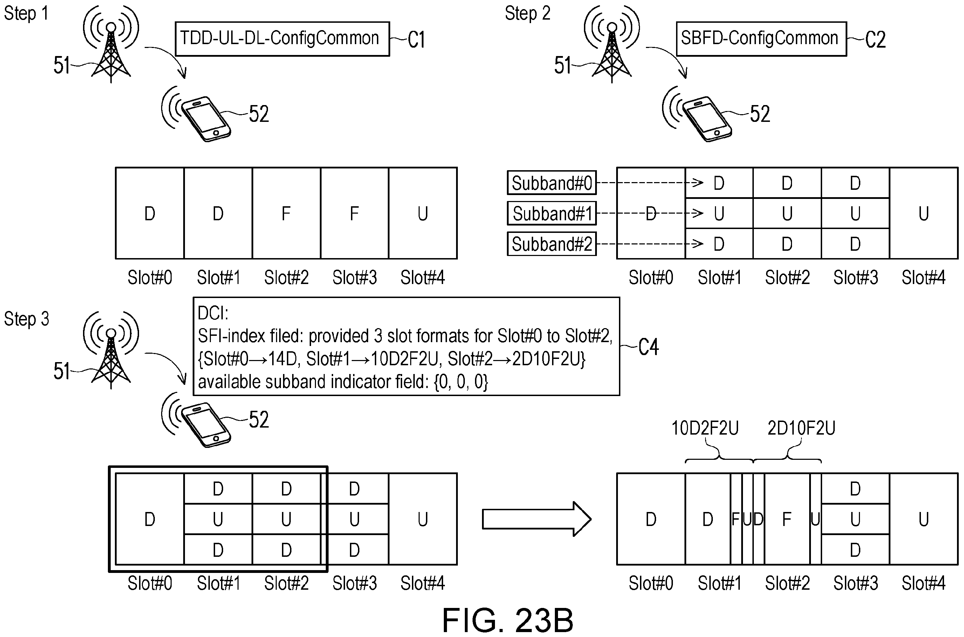

See FIG. 23B, which shows a schematic diagram of ignoring the second configuration and configuring the symbol by following the DCI.

In Step 1 of FIG. 23B, the UE 52 may determine Slot#0 to Slot#4 to be D, D, F, F, U slots based on the first configuration C1.

In Step 2 of FIG. 23B, the UE 52 may overwrite Slot#1 to Slot#3 to be SBFD resources based on the second configuration C2, wherein the transmission directions for each subband within Slot#1 to Slot#3 may be exemplarily shown in FIG. 23B.

In Step 3 of FIG. 23B, the UE 52 may receive DCI C4 from the network device 51, wherein the DCI C4 may be assumed to have the SFI-index field providing 3 slot formats for Slot#0 to Slot#2 and the available subband indicator field having the bit combination of {0, 0, 0}.

In the embodiment, the slot format for Slot#0 may be specifically configured as "14D", which means that Slot#0 sequentially includes 14 DL symbols. In addition, the slot format for Slot#1 may be specifically configured as "10D2F2U", which means that Slot#1 sequentially includes 10 DL symbols, 2 flexible symbols, and 2 UL symbols. Likewise, the slot format for Slot#2 may be specifically configured as "2D10F2U", which means that Slot#2 sequentially includes 2 DL symbols, 10 flexible symbols, and 2 UL symbols.

In the embodiment, since the available subband indicator field has the bit combination of {0, 0, 0}, the UE 52 may ignore the SBFD resources indicated by the second configuration C2 and configure (or assume/interpret) the symbols by following the DCI C4.

Accordingly, the resulted resource configurations for the symbols in Slot#1 to Slot#2 would respectively be "10D2F2U" and "2D10F2U" as indicated by the DCI C4.

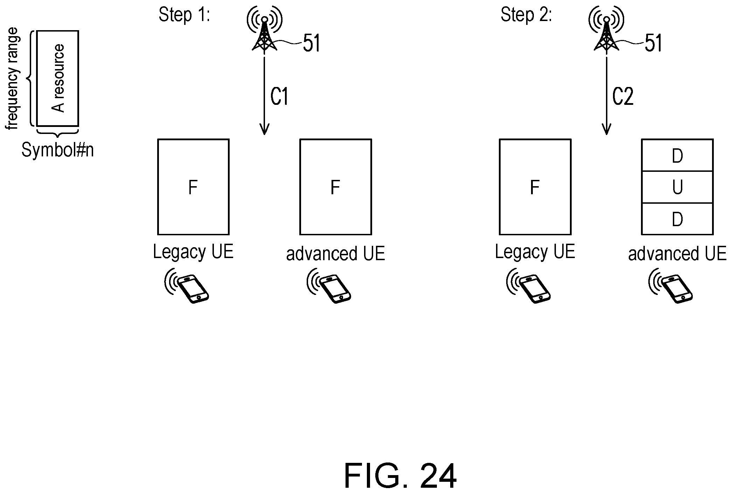

See FIG. 24, which shows a schematic diagram of configuring SBFD resources according to an embodiment of the disclosure.

In FIG. 24, the network device 51 may transmit the first configuration C1 to the legacy UE and the advanced UE for these UE to configure the transmission direction for a particular resource. In addition, the network device 52 may transmit the second configuration C2 to the advanced UE, such that the advanced UE may accordingly configure the particular resource as an SBFD resource.

For example, the network device 51 may use the first configuration C1 to control the legacy UE and the advanced UE to configure Symbol#n as an "F" symbol. In addition, the network device 51 may use the second configuration C2 to control the advanced UE to further configure Symbol#n as an "S" symbol, but the disclosure is not limited thereto.

In some embodiments, the network device 51 may further use the DCI C4 to configure the particular resource for both of the legacy UE and the advanced UE.

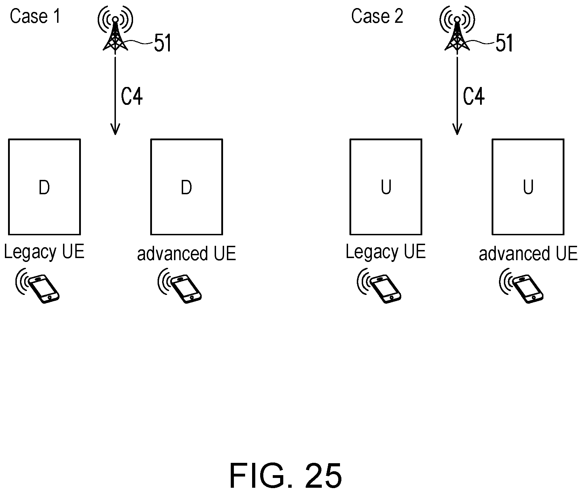

See FIG. 25, which shows a schematic diagram of configuring a resource for legacy/advanced UE by using DCI.

In one embodiment, in response to determining that a symbol within the at least one slot is configured by the second configuration C2 and the DCI C4 configures the symbol as DL, the UE may ignore the at least one SBFD resource indicated by the second configuration C2 for the symbol and configure the symbol as DL by following the DCI C4.

For example, in Case 1 of FIG. 25, the network device 51 may transmit the DCI C4 to the legacy UE and the advanced UE, wherein the DCI C4 may indicate the particular resource (e.g., Symbol#n in FIG. 24) as DL resource. Accordingly, the legacy UE and the advanced UE configure the particular resource as DL resource. That is, although Symbol#n has been configured as an SBFD symbol based on the second configuration C2, the advanced

UE may still configure Symbol#n as DL symbol by following the DCI C4.

In one embodiment, in response to determining that a symbol within the at least one slot is configured by the second configuration C2 and the DCI C4 configures the symbol as UL, the UE may ignore the at least one SBFD resource indicated by the second configuration C2 for the symbol and configure the symbol as UL by following the DCI C4.

For example, in Case 2 of FIG. 25, the network device 51 may transmit the DCI C4 to the legacy UE and the advanced UE, wherein the DCI C4 may indicate the particular resource (e.g., Symbol#n in FIG. 24) as UL resource. Accordingly, the legacy UE and the advanced UE configure the particular resource as UL resource. That is, although Symbol#n has been configured as an SBFD symbol based on the second configuration C2, the advanced UE may still configure Symbol#n as UL symbol by following the DCI C4.

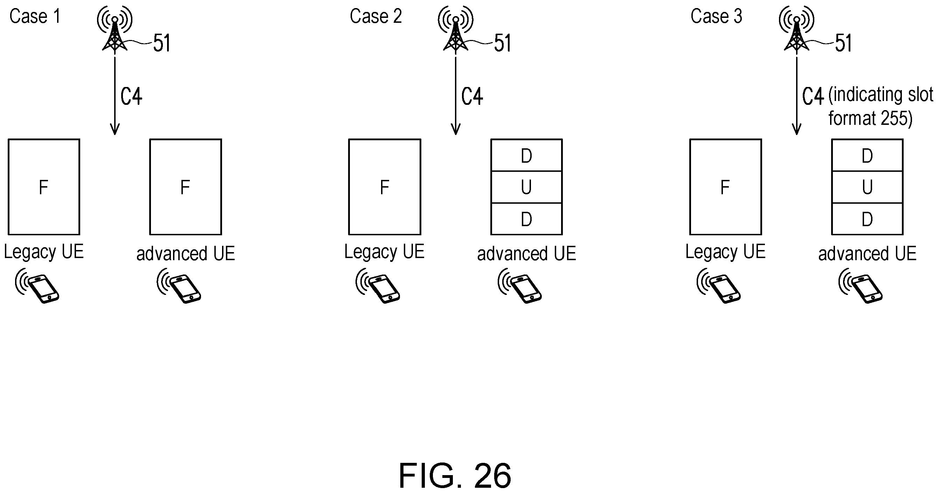

See FIG. 26, which shows a schematic diagram of configuring a resource for legacy/advanced UE by using DCI.

In one embodiment, in response to determining that a symbol within the at least one slot is configured by the second configuration C2 and the DCI C4 configures the symbol as flexible, the UE may ignore the at least one SBFD resource indicated by the second configuration C2 for the symbol and configure the symbol as flexible by following the DCI C4.

For example, in Case 1 of FIG. 26, the network device 51 may transmit the DCI C4 to the legacy UE and the advanced UE, wherein the DCI C4 may indicate the particular resource (e.g., Symbol#n in FIG. 24) as flexible resource. Accordingly, the legacy UE and the advanced UE configure the particular resource as flexible resource. That is, although Symbol#n has been configured as an SBFD symbol based on the second configuration C2, the advanced UE may still configure Symbol#n as flexible symbol by following the DCI C4.

In another embodiment, in response to determining that a symbol within the at least one slot is configured by the second configuration C2 and the DCI C4 configures the symbol as flexible, the UE may ignore the DCI C4 and configure the symbol by following the second configuration C2 for the symbol.

For example, in Case 2 of FIG. 26, the network device 51 may transmit the DCI C4 to the legacy UE and the advanced UE, wherein the DCI C4 may indicate the particular resource (e.g., Symbol#n in FIG. 24) as flexible resource. Accordingly, the legacy UE may configure the particular resource as flexible resource. On the other hand, the advanced UE may maintain Symbol#n as the SBFD symbol configured by the second configuration C2 and ignore the DCI C4.

In Case 3 of FIG. 26, the network device 51 may transmit the DCI C4 to the legacy UE and the advanced UE, wherein the DCI C4 may include a particular slot format (e.g., the slot format 255) for indicating the particular resource (e.g., Symbol#n in FIG. 24) follow higher layer configuration and ignore the DCI C4. Accordingly, the legacy UE may maintain the particular resource as flexible resource, e.g., follow C1 configuration and ignore DCI C4. On the other hand, the advanced UE may maintain Symbol#n as the SBFD symbol, e.g., follow C2 configuration and ignore the DCI C4.

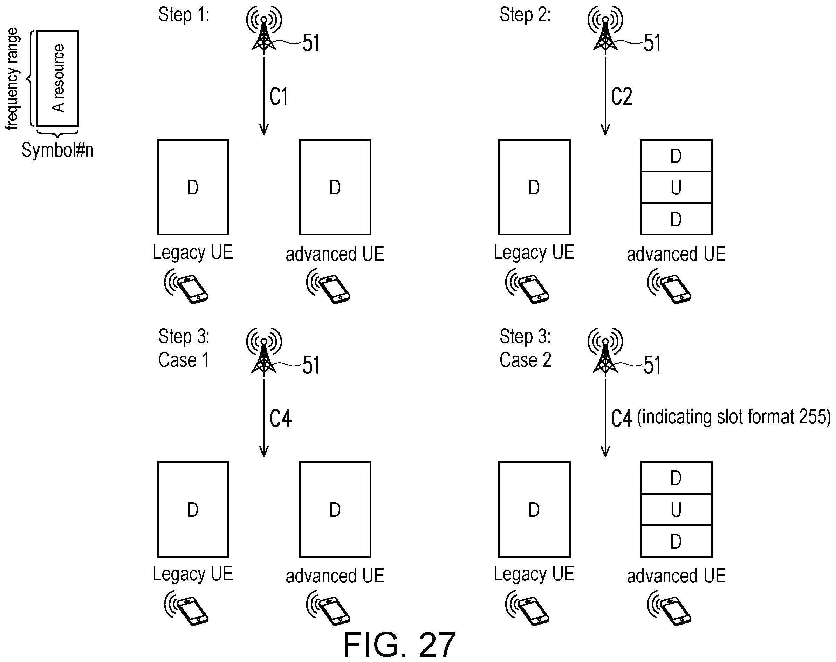

See FIG. 27, which shows a schematic diagram of configuring a resource by using DCI according to an embodiment of the disclosure.

In Step 1 of FIG. 27, the legacy UE and the advanced UE may determine Symbol#n to be a DL symbol according to the first configuration C1 from the network device 51.

In Step 2 of FIG. 27, the advanced UE may determine Symbol#n to be an SBFD symbol according to the second configuration C2 from the network device 51.

In Case 1 of Step 3, the network device 51 may use the DCI C4 to indicate Symbol#n as a DL symbol. Accordingly, the legacy UE and the advanced UE may configure Symbol#n as a DL symbol.

In Case 2 of Step 3, the network device 51 may transmit the DCI C4 to the legacy UE and the advanced UE, wherein the DCI C4 may include a particular slot format (e.g., the slot format 255) for Symbol#n. Accordingly, the legacy UE may maintain Symbol#n as a DL symbol. On the other hand, the advanced UE may maintain Symbol#n as the SBFD symbol configured by the second configuration C2.

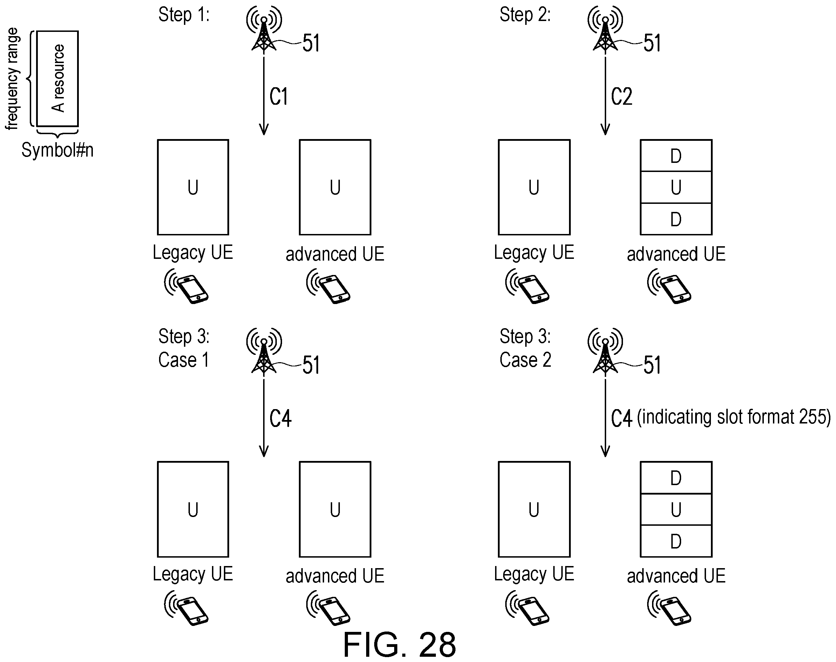

See FIG. 28, which shows a schematic diagram of configuring a resource by using DCI according to an embodiment of the disclosure.

In Step 1 of FIG. 28, the legacy UE and the advanced UE may determine Symbol#n to be a UL symbol according to the first configuration C1 from the network device 51.

In Step 2 of FIG. 28, the advanced UE may determine Symbol#n to be an SBFD symbol according to the second configuration C2 from the network device 51.

In Case 1 of Step 3, the network device 51 may use the DCI C4 to indicate Symbol#n as a UL symbol. Accordingly, the legacy UE and the advanced UE may configure Symbol#n as a UL symbol.

In Case 2 of Step 3, the network device 51 may transmit the DCI C4 to the legacy UE and the advanced UE, wherein the DCI C4 may include a particular slot format (e.g., the slot format 255) for Symbol#n. Accordingly, the legacy UE may maintain Symbol#n as a UL symbol. On the other hand, the advanced UE may maintain Symbol#n as the SBFD symbol configured by the second configuration C2.

In some embodiments, the network device 51 may directly use the DCI C4 to configure a particular resource to be an SBFD resource without providing the second configuration C2.

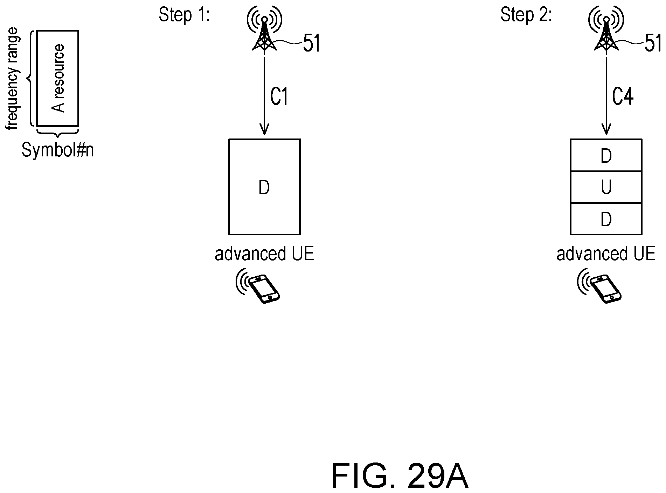

See FIG. 29A, which shows a schematic diagram of configuring a resource as SBFD resource by using DCI.

In Step 1 of FIG. 29A, the advanced UE may determine Symbol#n to be a DL symbol according to the first configuration C1 from the network device 51.

In Step 2 of FIG. 29A, the network device 51 may use the DCI C4 to indicate Symbol#n as a flexible symbol. In this case, the advanced UE may assume Symbol#n to be an SBFD symbol.

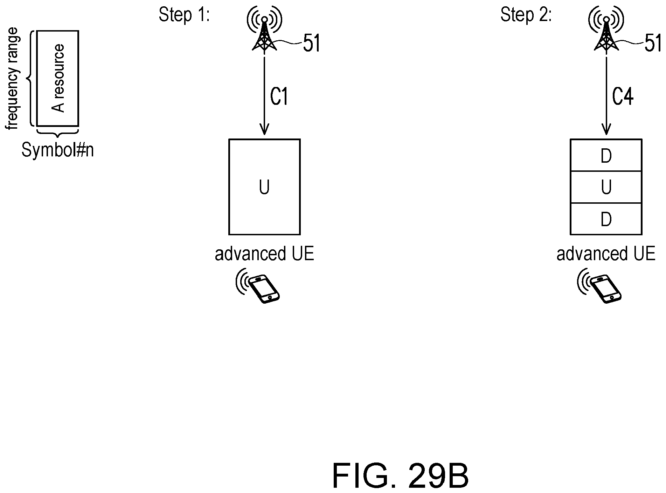

See FIG. 29B, which shows a schematic diagram of configuring a resource as SBFD resource by using DCI.

In Step 1 of FIG. 29B, the advanced UE may determine Symbol#n to be a UL symbol according to the first configuration C1 from the network device 51.

In Step 2 of FIG. 29B, the network device 51 may use the DCI C4 to indicate Symbol#n as a flexible symbol. In this case, the advanced UE may assume Symbol#n to be an SBFD symbol.

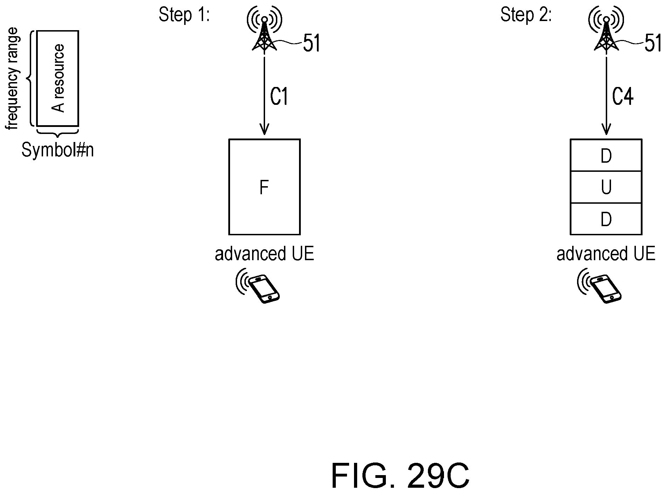

See FIG. 29C, which shows a schematic diagram of configuring a resource as SBFD resource by using DCI.

In Step 1 of FIG. 29C, the advanced UE may determine Symbol#n to be a flexible symbol according to the first configuration C1 from the network device 51.

In Step 2 of FIG. 29C, the network device 51 may use the DCI C4 to indicate Symbol#n as a flexible symbol. In this case, the advanced UE may assume Symbol#n to be an SBFD symbol.

In one embodiment, the UE 52 may receive a slot format table from the network device 51, wherein the slot format table may be the new slot format table of Table 2, which includes at least one of a DL symbol, a UL symbol, a flexible symbol, and an SBFD symbol.

In one embodiment, in response to determining that a symbol within the at least one slot is configured by the DCI C4 as the SBFD symbol, the UE 52 may determine that a frequency domain configuration of the symbol is the same as the second configuration C2.

In some embodiments, the UE 52 may receive a control command from the network device 51, wherein the control command may indicate whether the SBFD resource is available.

In one embodiment, if the UE 52 determines that the control command indicates an enabled state, the UE 52 may determine that the SBFD resource is available. On the other hand, if the UE 52 determines that the control command indicates a disabled state, the UE 52 may determine that the SBFD resource is not available.

In some embodiments, the control command may be indicated by DCI, MAC CE or other higher layer configurations.

In some embodiments, the control command may be cell-specific, BWP-specific, or UE- specific.

In some embodiments, the control command may be periodically provided by the network device 51.

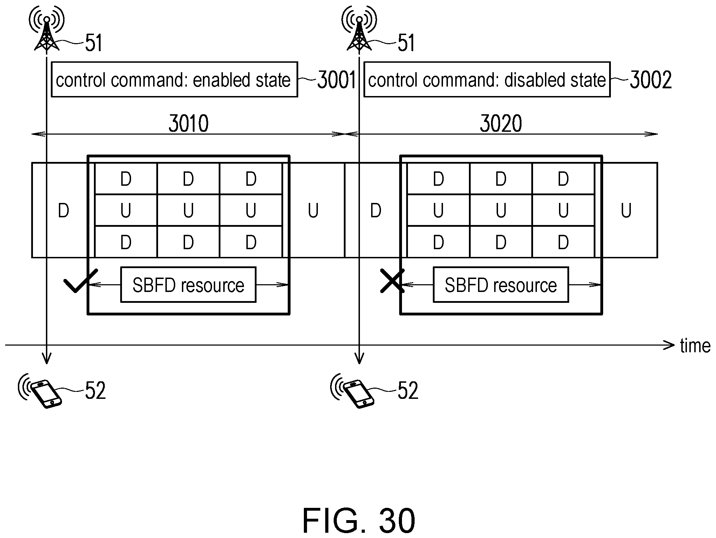

See FIG. 30, which shows a schematic diagram of applying the control command according to an embodiment of the disclosure.

In the embodiment, the network device 51 may periodically transmit the control commands to the UE 52, wherein the time difference between two consecutive control commands (e.g., the control commands 3001 and 3002) may be, for example, the slot configuration period P (e.g., "dl-UL-TransmissionPeriodicity").

In FIG. 30, the control command 3001 may be set by the network device 51 to be indicating the enabled state. In this case, the UE 52 may accordingly determine that the SBFD resources in the time period 3010 corresponding to the control command 3001 are available.

In addition, the control command 3002 may be set by the network device 51 to be indicating the disabled state. In this case, the UE 52 may accordingly determine that the SBFD resources in the time period 3020 corresponding to the control command 3002 are not available.

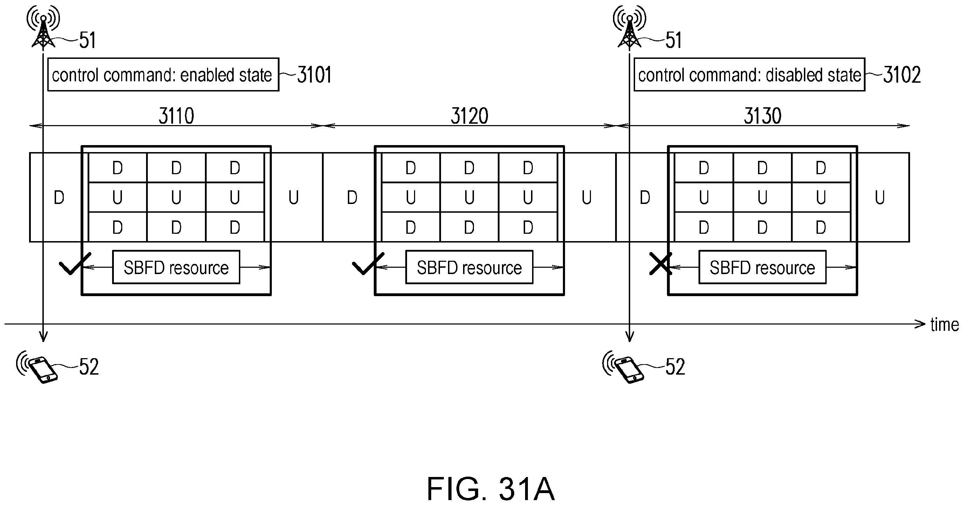

See FIG. 31A, which shows a schematic diagram of applying the control command according to an embodiment of the disclosure.

In the embodiment, the network device 51 may provide the control command 3101 indicating the enabled state to the UE 52, and the UE 52 may accordingly determine that the SBFD resources in the following time periods (e.g., the time periods 3110 and 3120) are available until receiving the control command 3102 indicating the disabled state.

In this case, the UE 52 may accordingly determine that the SBFD resources in the time period 3130 corresponding to the control command 3102 are not available.

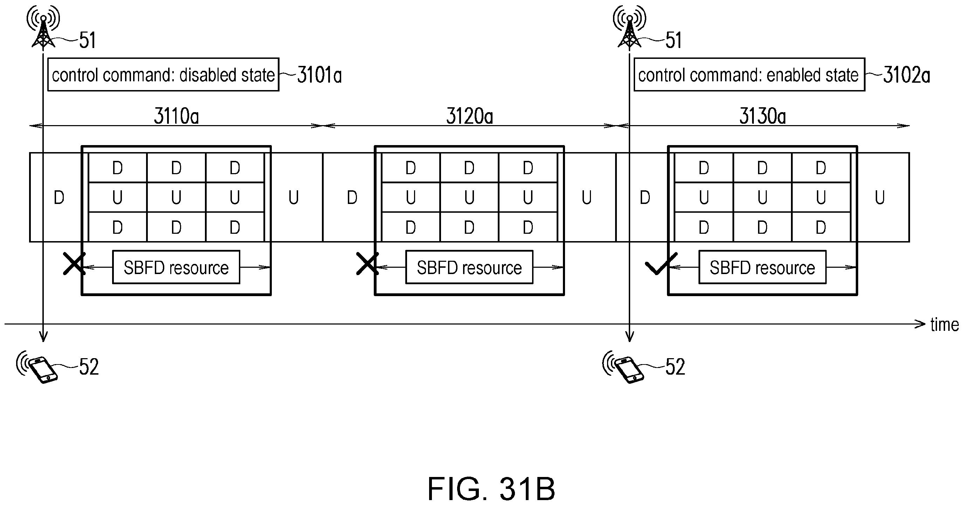

See FIG. 31B, which shows a schematic diagram of applying the control command according to an embodiment of the disclosure.

In the embodiment, the network device 51 may provide the control command 3101a indicating the disabled state to the UE 52, and the UE 52 may accordingly determine that the SBFD resources in the following time periods (e.g., the time periods 3110a and 3120a) are not available until receiving the control command 3102a indicating the enabled state.

In this case, the UE 52 may accordingly determine that the SBFD resources in the time period 3130a corresponding to the control command 3102a are available.

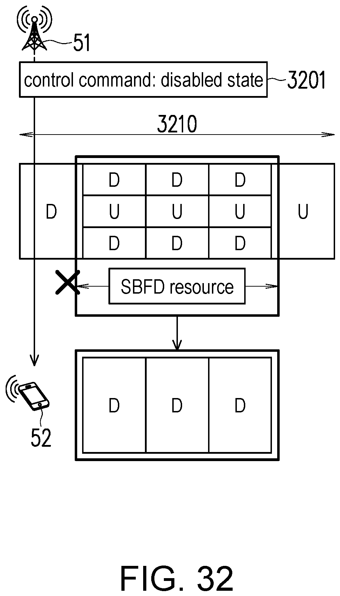

See FIG. 32, which shows a schematic diagram of unavailable SBFD resources according to an embodiment of the disclosure.

In FIG. 32, it is assumed that the UE 52 receives the control command 3201 indicating the disabled state, and hence the UE 52 may accordingly determine that the SBFD resources in the time period 3210 corresponding to the control command 3201 are not available.

In this case, the UE 52 may determine the transmission directions of the unavailable SBFD resources by following the first configuration C1. For example, if the first configuration C1 indicates that the slots corresponding to the SBFD resources are DL slots, the UE 52 may determine these slots to be DL slots as exemplarily shown in FIG. 32, but the disclosure is not limited thereto.

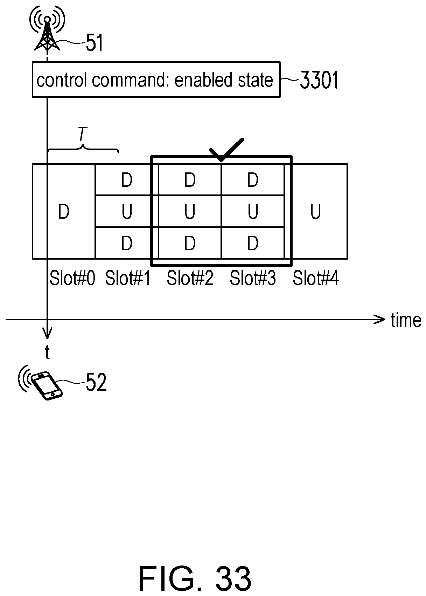

See FIG. 33, which shows a schematic diagram of applying the control command according to an embodiment of the disclosure.

In the embodiment, if the UE 52 receives the control command 3301 indicating the enabled state at time point t, the UE 52 may determine the SBFD resources after time point t+T are available, wherein T is an application time associated with the SBFD resources.

Accordingly, in the scenario of FIG. 33, although Slot#1 to Slot#3 are configured as SBFD resources, the UE 52 may only determine Slot#2 and Slot#3 as available since Slot#2 starts after the time point t+T. That is, Slot#1 is determined as not available since Slot#1 starts before the time point t+T, but the disclosure is not limited thereto.

In another embodiment, if the UE 52 receives the control command 3301 indicating the disabled state at time point t, the UE 52 may determine the SBFD resources after time point t+T are not available. Accordingly, in the scenario of FIG. 33, although Slot#1 to Slot#3 are configured as SBFD resources, the UE 52 may only determine Slot#1 as available since Slot#1 starts before the time point t+T. That is, Slot#2 and Slot#3 are determined as not available since Slot#2 starts after the time point t+T, but the disclosure is not limited thereto.

In some embodiments, it may be possible for the UE 52 to miss the receptions of control commands. To solve this problem, the UE 52 may use the SBFD resources in a different way.

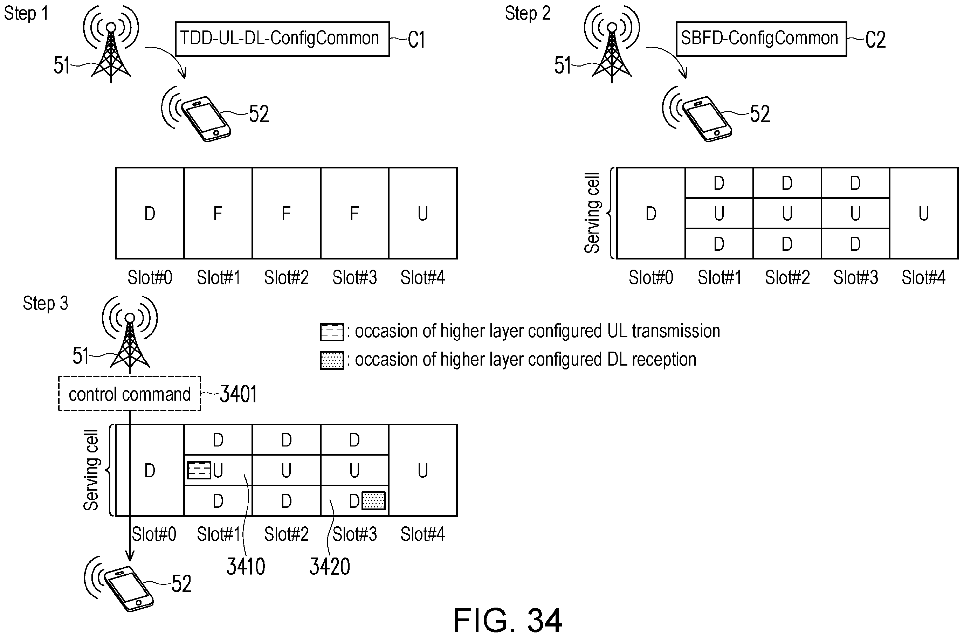

See FIG. 34, which shows a schematic diagram of handling a missed control command according to an embodiment of the disclosure.

In Step 1 of FIG. 34, the UE 52 may determine Slot#0 to Slot#4 to be D, F, F, F, U slots based on the first configuration C1 from the network device 51.

In Step 2 of FIG. 34, the UE 52 may overwrite Slot#1 to Slot#3 to be SBFD resources based on the second configuration C2, wherein the transmission directions for each subband within Slot#1 to Slot#3 may be exemplarily shown in FIG. 34.

In Step 3 of FIG. 34, it is assumed that the UE 52 misses the reception of the control command 3401 from the network device 51, and hence the UE 52 do not know whether the SBFD resources in Slot#1 to Slot#3 are available.

In the embodiment, since the UE 52 misses the control command 3401, and the first configuration C1 configures Slot#1 as flexible, the UE 52 may not perform higher layer configured UL transmission within the UL subband 3410.

In the embodiment, since the UE 52 misses the control command 3401, and the first configuration C1 configures Slot#3 as flexible, the UE 52 may not perform higher layer configured DL reception within the DL subband 3420.

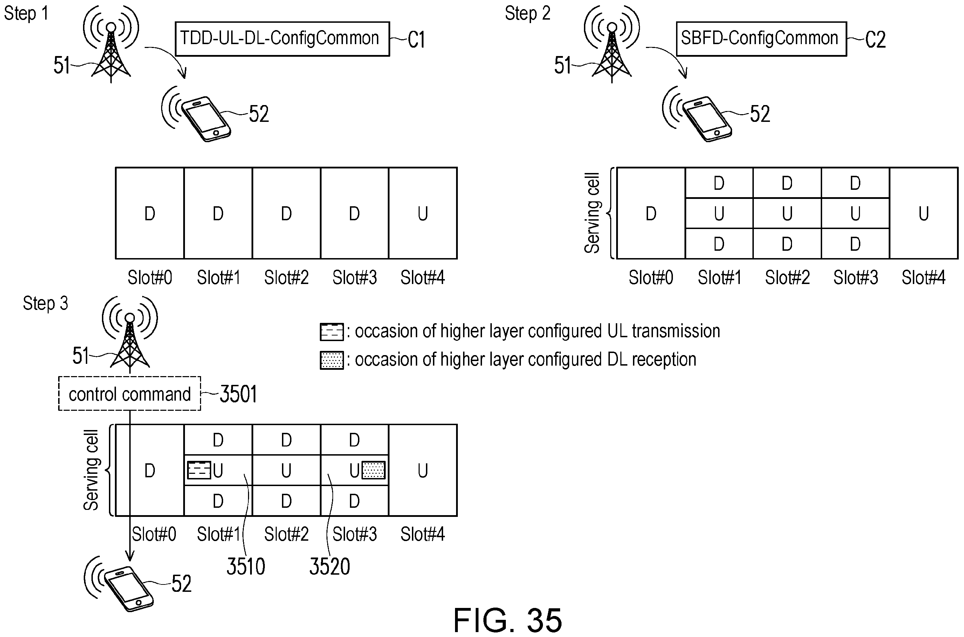

See FIG. 35, which shows a schematic diagram of handling a missed control command according to an embodiment of the disclosure.

In Step 1 of FIG. 35, the UE 52 may determine Slot#0 to Slot#4 to be D, D, D, D, U slots based on the first configuration C1 from the network device 51.

In Step 2 of FIG. 35, the UE 52 may overwrite Slot#1 to Slot#3 to be SBFD resources based on the second configuration C2, wherein the transmission directions for each subband within Slot#1 to Slot#3 may be exemplarily shown in FIG. 35.

In Step 3 of FIG. 35, it is assumed that the UE 52 misses the reception of the control command 3501 from the network device 51, and hence the UE 52 do not know whether the SBFD resources in Slot#1 to Slot#3 are available.

In the embodiment, since the UE 52 misses the control command 3501, and the first configuration C1 configures Slot#1 as DL, the UE 52 may not perform higher layer configured UL transmission within the UL subband 3510.

In the embodiment, since the UE 52 misses the control command 3501, and the first configuration C1 configures Slot#3 as DL, the UE 52 may not perform higher layer configured DL reception within the UL subband 3520.

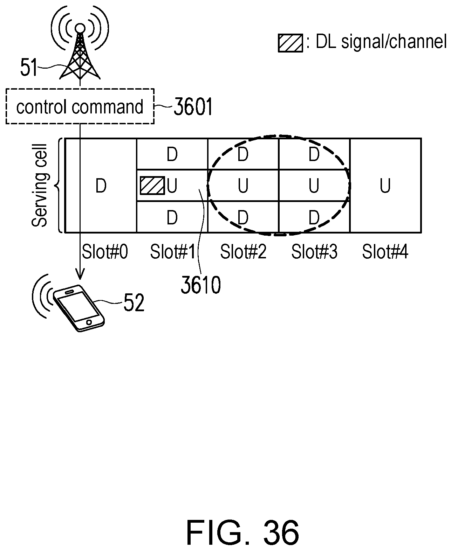

See FIG. 36, which shows a schematic diagram of handling a missed control command according to an embodiment of the disclosure.

In FIG. 36, the resource configurations of Slot#0 to Slot#4 may be the same as the resource configurations of Slot#0 to Slot#4 in FIG. 35 after Step 2, but the disclosure is not limited thereto.

In the embodiment, it is assumed that the UE 52 misses the reception of the control command 3601, but the UE 52 is scheduled to perform DL reception at the subband 3610, which is configured as a UL subband by the second configuration C2.

Accordingly, the UE 52 may derive that the control command 3601 indicates the disabled state, and hence the UE 52 may determine the SBFD resources in the following Slot#2 and Slot#3 are not available, but the disclosure is not limited thereto.

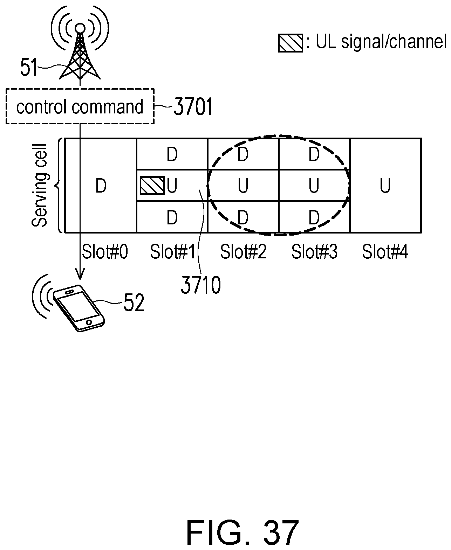

See FIG. 37, which shows a schematic diagram of handling a missed control command according to an embodiment of the disclosure.

In FIG. 37, the resource configurations of Slot#0 to Slot#4 may be the same as the resource configurations of Slot#0 to Slot#4 in FIG. 35 after Step 2, but the disclosure is not limited thereto.

In the embodiment, it is assumed that the UE 52 misses the reception of the control command 3701, but the UE 52 is scheduled to perform UL transmission at the subband 3710, which is configured as a UL subband by the second configuration C2.

Accordingly, the UE 52 may derive that the control command 3701 indicates the enabled state, and hence the UE 52 may determine the SBFD resources in the following Slot#2 and Slot#3 are available, but the disclosure is not limited thereto.

In one embodiment, the control command indicating the disabled state may be designed with a counter, wherein the counter may be initiated to have a certain value (referred to as an integer of K) and decreased by one when one time period passes. In this case, the UE 52 may assume the SBFD resources to be not available if the corresponding counter value is non-zero.

In one embodiment, when the counter value is decreased to be zero, the UE 52 may assume the SBFD resources to be available.

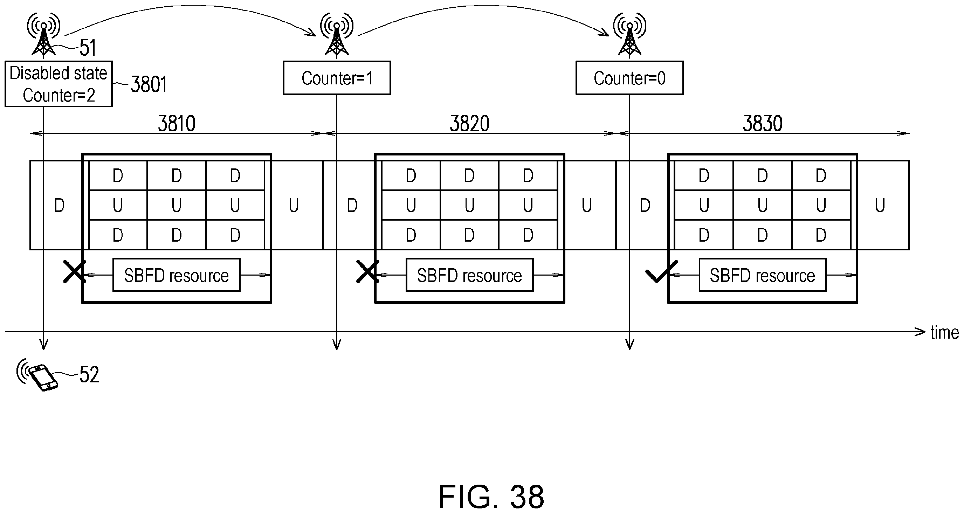

See FIG. 38, which shows a schematic diagram of applying the counter of the control command according to an embodiment of the disclosure.

In FIG. 38, it is assumed that the UE 52 receives the control command 3801 indicating the disabled state and accordingly initiates the corresponding counter to be 2 (e.g., K).

In the time period 3810, since the counter corresponding to the control command 3801 is 2, the UE 52 may assume the SBFD resources in the time period 3810 are not available.

In the time period 3820, since the counter corresponding to the control command 3801 is 1 (i.e., the counter has been decreased by one because the time period 3810 has passed), the UE 52 may assume the SBFD resources in the time period 3820 are not available.

In the time period 3830, since the counter corresponding to the control command 3801 is 0 (i.e., the counter has been decreased by one because the time period 3820 has passed), the UE 52 may assume the SBFD resources in the time period 3830 become available.

In some embodiments, the certain value used to initiate the counter may be determined by the network device 51 according to the communication quality between the network device 51 and the UE 52. For example, if the communication quality measured by the network device 51 is terrible, the certain value used to initiate the counter may be determined to be a larger value for the UE 52 to avoid using the SBFD resources for a longer time. On the contrary, if the communication quality measured by the network device 51 is good, the certain value used to initiate the counter may be determined to be a smaller value for the UE 52 to avoid using the SBFD resources for a shorter time.

In some embodiments, the certain value used to initiate the counter may be indicated by, for example, DCI, MAC CE, and/or other higher layer configurations.

In one embodiment, the network device 51 in the scenario of FIG. 38 may stop providing control commands during the time periods 3820 and 3830, but the disclosure is not limited thereto.

In some embodiments, the network device 51 may directly decrease the counter of the control command to be zero when the communication quality is determined to be good.

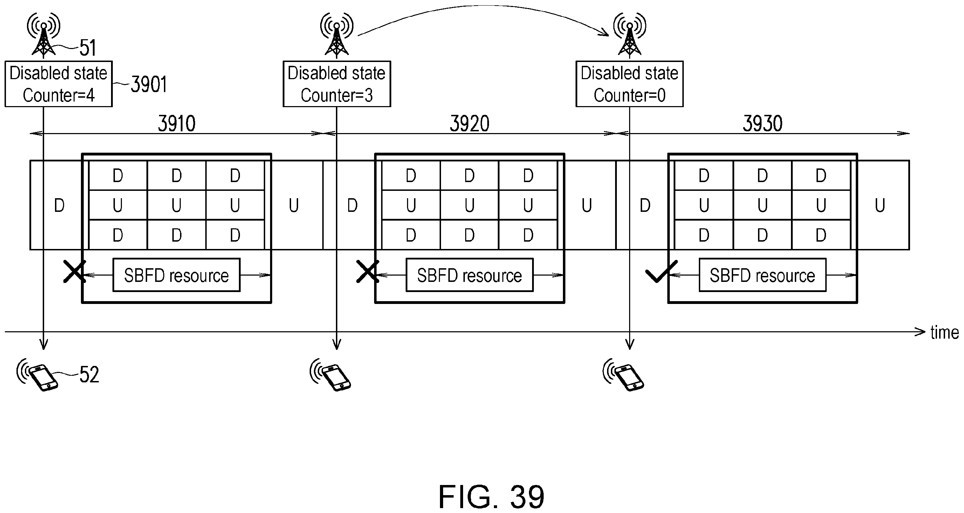

See FIG. 39, which shows a schematic diagram of applying the counter of the control command according to an embodiment of the disclosure.

In FIG. 39, it is assumed that the UE 52 receives the control command 3901 indicating the disabled state and accordingly initiates the corresponding counter to be 4 (e.g., K).

In the time period 3910, since the counter corresponding to the control command 3901 is 2, the UE 52 may assume the SBFD resources in the time period 3910 are not available.

In the time period 3920, since the counter corresponding to the control command 3901 is 3 (i.e., the counter has been decreased by one because the time period 3910 has passed), the UE 52 may assume the SBFD resources in the time period 3920 are not available.

In the time period 3930, it is assumed that the network device 51 detects that the communication quality has become good, and hence the network device 51 may directly set the counter corresponding to the control command 3901 to be zero. In this case, since the counter corresponding to the control command 3901 is 0, the UE 52 may assume the SBFD resources in the time period 3930 become available.

In some embodiments, the control command may be implemented as a bitmap including M bits (M is an integer), wherein an m-th (m is an index) bit of the M bits corresponds to m-th SBFD resource of one time period.

In one embodiment, if the m-th bit has the first bit value (e.g., "1"), the UE 52 may determine that the m-th SBFD resource of the corresponding time period is available. On the other hand, if the m-th bit has the second bit value (e.g., "0"), the UE 52 may determine that the m-th SBFD resource of the corresponding time period is not available.

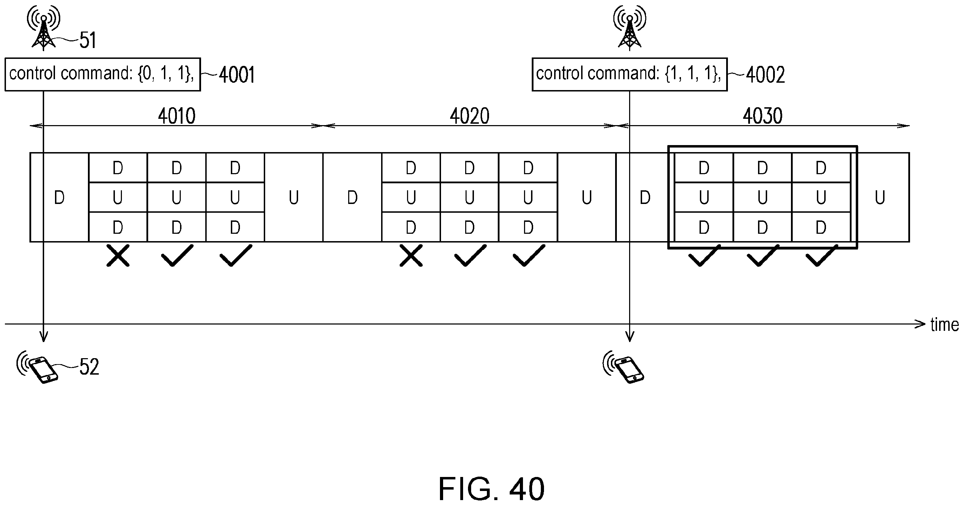

See FIG. 40, which shows a schematic diagram of implementing the control command as a bitmap according to an embodiment of the disclosure.

In FIG. 40, it is assumed that the UE 52 receives the control command 4001, which is a bitmap having the bit combination of {0, 1, 1}. In this case, the UE 52 may determine the first SBFD resource in the corresponding time periods (e.g., the time period 4010 and 4020) is not available and determine the second and third SBFD resources in the corresponding time periods (e.g., the time period 4010 and 4020) are available.

In addition, it is assumed that the UE 52 receives the control command 4002, which is a bitmap having the bit combination of {1, 1, 1}. In this case, the UE 52 may determine the first, second, and third SBFD resource in the corresponding time periods (e.g., the time period 4030) are available.

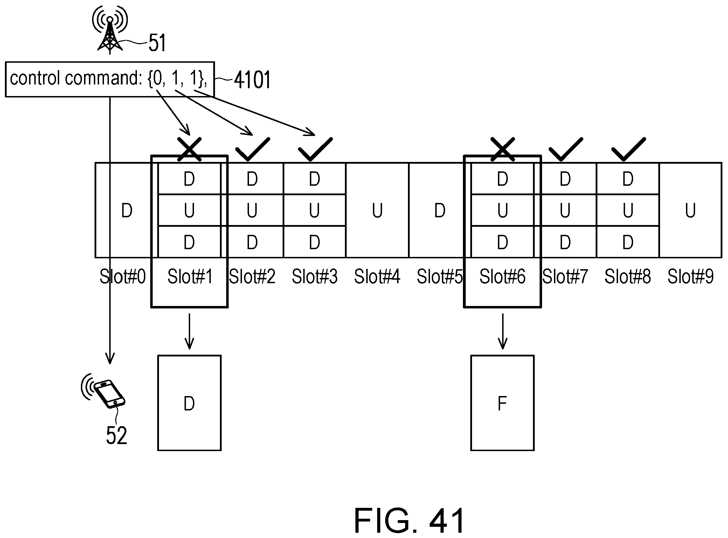

See FIG. 41, which shows a schematic diagram of implementing the control command as a bitmap according to an embodiment of the disclosure.

In FIG. 41, it is assumed that the UE 52 receives the control command 4101, which is a bitmap having the bit combination of {0, 1, 1}. In this case, the UE 52 may determine the first SBFD resource (e.g., the SBFD resources in Slot#1 and Slot#6) in the corresponding time periods is not available and determine the second and third SBFD resources (e.g., the SBFD resources in Slot#2, Slot#3, Slot#7, and Slot#8) in the corresponding time periods are available.

In the embodiment, the SBFD resources determined to be not available may be used by the UE 52 based on, for example, the first configuration C1.

For example, if the first configuration C1 configures Slot#1 as a DL slot, the UE 52 may assume Slot#1 as a DL slot. In addition, if the first configuration C1 configures Slot#6 as a flexible slot, the UE 52 may assume Slot#6 as a flexible slot.

In some embodiments, the control command may be implemented as a bitmap including P bits (P is an integer), wherein a p-th (p is an index) bit of the P bits corresponds to p-th SBFD symbol of a corresponding SBFD slot in one time period.

In one embodiment, if the p-th bit has the first bit value (e.g., "1"), the UE 52 may determine that the p-th SBFD symbol of the corresponding SBFD slot of the corresponding time period is available. On the other hand, if the p-th bit has the second bit value (e.g., "0"), the UE 52 may determine that the p-th SBFD symbol of the corresponding SBFD slot of the corresponding time period is not available.

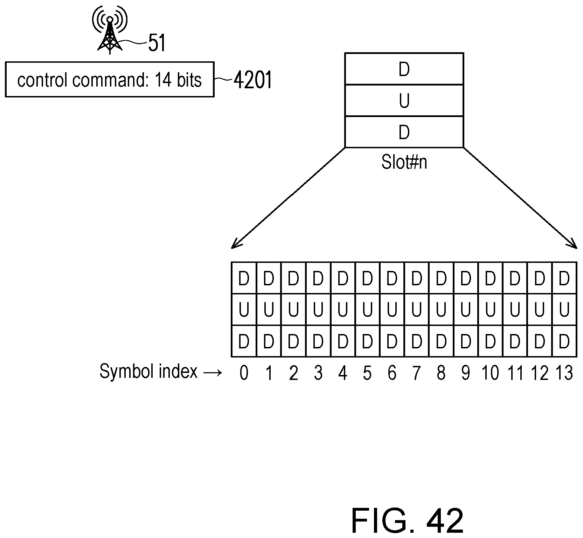

See FIG. 42, which shows a schematic diagram of implementing the control command as a bitmap according to an embodiment of the disclosure.

In FIG. 42, it is assumed that the UE 52 receives the control command 4201, which is a bitmap having 14 bits (e.g., P is 14), which respectively corresponds to the 14 SBFD symbols in Slot#n (e.g., an SBFD slot).

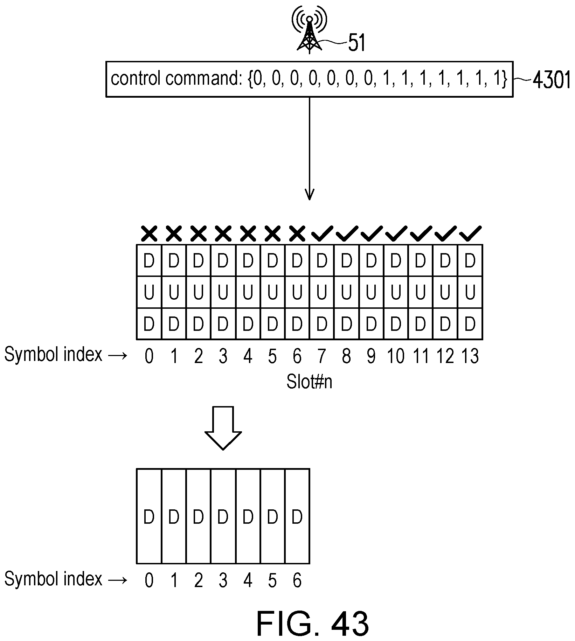

See FIG. 43, which shows a schematic diagram of implementing the control command as a bitmap according to FIG. 42.

In FIG. 43, it is assumed that the UE 52 receives the control command 4301, which is a bitmap having the bit combination of {0, 0, 0, 0, 0, 0, 0, 1, 1, 1, 1, 1, 1, 1}. In this case, the UE 52 may determine the first to seventh symbols (e.g., Symbolic to Symbol#6) in Slot#n are not available and determine the eighth to fourteenth symbols (e.g., Symbol#7 to Symbol#13) in Slot#n are not available.

In the embodiment, the SBFD symbols determined to be not available may be used by the UE 52 based on, for example, the first configuration C1.

For example, if the first configuration C1 configures the first to seventh symbols in Slot#n as DL symbols, the UE 52 may assume the first to seventh symbols in Slot#n as DL symbols.

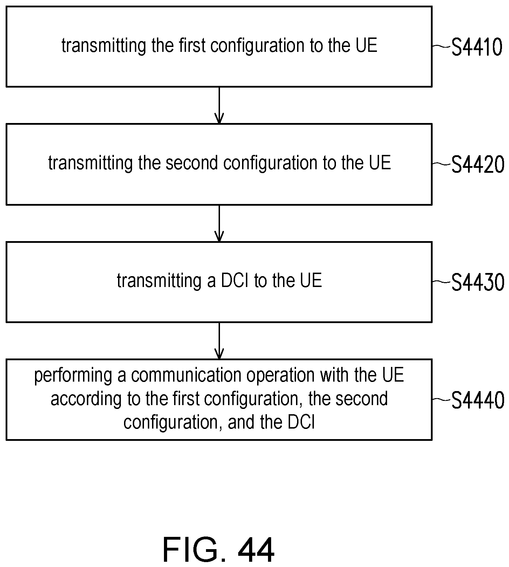

See FIG. 44, which shows a flow chart of the method for setting SBFD resource according to an embodiment of the disclosure. The method of this embodiment may be executed by the network device 51 of the disclosure.

In step S4410, the network device 51 transmits the first configuration C1 to the UE 52. In step S4420, the network device 51 transmits the second configuration C2 to the UE 52. In step S4430, the network device 51 transmits the DCI C4 to the UE 52. In step S4440, the network device 51 performs the communication operation with the UE 52 according to the first configuration C1, the second configuration C2, and the DCI C4. The details associated with steps S4410 to S4440 may be referred to the above descriptions, which would not be repeated herein.

In summary, the embodiments of the disclosure provide solutions for the UE and the network device to communicate with each other by using the SBFD resources configured by the higher layer configurations and/or DCI.

## Claims

1. A method for setting subband full duplex, SBFD, resource, applied to a user equipment. UE. (52), **characterized in** comprising:
receiving (S1110), by the UE (52), a first configuration (C1) from a network device (51), wherein the first configuration (C1) indicates a plurality of transmission directions for a time period (S);
receiving (S1120), by the UE (52), a second configuration from the network device (51), wherein the second configuration (C2) indicates at least one SBFD resource within the time period (S);
receiving (S1130), by the UE (52), a third configuration (C3) from the network device (51), wherein the third configuration (C3) indicates a downlink bandwidth part and an uplink bandwidth part;
performing (S1140), by the UE (52), a communication operation with the network device (51) according to the first configuration (C1), the second configuration (C2), and the third configuration (C3).

2. The method according to claim 1, wherein the first configuration (C1) comprises a first pattern (C11) and a subcarrier spacing (*µ_{ref}*), the first pattern (C11) indicates a beginning part (531), a middle part (532), and an end part (533) of the time period (S);
wherein the beginning part (531) of the time period (S) indicated by the first pattern (C11) comprises at least one downlink resource, the middle part (532) of the time period (S) indicated by the first pattern (C11) comprises at least one flexible resource, and the end part (533) of the time period (S) indicated by the first pattern (C11) comprises at least one uplink resource;
wherein the second configuration (C2) comprises an SBFD setting, wherein the SBFD setting is used to perform at least one of following operations:
overwriting the at least one downlink resource indicated by the first pattern (C11) to a first SBFD resource (711); and
overwriting the at least one flexible resource indicated by the first pattern (C11) to a second SBFD resource (712).

3. The method according to claim 2, wherein the SBFD setting is not allowed to be used to overwrite the at least one uplink resource indicated by the first pattern (C11).

4. The method according to claim 2, wherein the first SBFD resource (711) is consecutive in a time domain and the second SBFD resource (712) is consecutive in the time domain;
wherein an end time of the first SBFD resource (711) is aligned with a start time of the second SBFD resource (712).

5. The method according to claim 1, wherein the first configuration (C1) indicates a first periodicity of the time period (S), and a second periodicity of the at least one SBFD resource configured by the second configuration (C2) is identical to the first periodicity.

6. The method according to claim 2, wherein the subcarrier spacing (*µ_{ref}*) is applied to the first pattern (C11) and the SBFD setting.

7. The method according to claim 2, wherein the SBFD setting comprises information for a time length, the time length equals to a sum of a time domain length of the first SBFD resource (711) and a time domain length of the second SBFD resource (712).

8. The method according to claim 1, wherein the transmission directions indicated by the first configuration (C1) are applied to a serving cell, and the at least one SBFD resource indicated by the second configuration (C2) in a frequency domain comprises at least one downlink subband and at least one uplink subband within the serving cell, wherein the at least one downlink subband and the at least one uplink subband are not overlapping with each other in a frequency domain.

9. The method according to claim 8, wherein each of the at least one downlink subband comprises at least one first resource block or a first set of consecutive resource blocks for a downlink reception, and each of the at least one uplink subband comprises at least one second resource block or a second set of consecutive resource blocks for an uplink transmission.

10. The method according to claim 1, further comprising:
determining a first intersection between the uplink bandwidth part and each of the at least one uplink subband as at least one uplink usable resource block; and
determining a second intersection between the downlink bandwidth part and each of the at least one downlink subband as at least one downlink usable resource block.

11. The method according to claim 10, wherein the UE (52) is allowed to perform an uplink transmission by using the at least one uplink usable resource block, and the UE (52) is allowed to perform a downlink reception by using the at least one downlink usable resource block.

12. The method according to claim 10, wherein the UE (52) is not allowed to perform an uplink transmission by using other uplink resource other than the at least one uplink usable resource block, and the UE (52) is not allowed to perform a downlink reception by using other downlink resource other than the at least one downlink usable resource block.

13. The method according to claim 1, wherein the downlink BWP and the uplink BWP have the same bandwidth part identifier.

14. User equipment (52), **characterized in** comprising:
a transceiver (302); and
a processor (304), coupled to the transceiver (302) and configured to perform:
controlling the transceiver (302) to receive (S1110) a first configuration (C1) from a network device (51), wherein the first configuration (C1) indicates a plurality of transmission directions for a time period (S);
controlling the transceiver (302) to receive (S1120) a second configuration (C2) from the network device (51), wherein the second configuration (C2) indicates at least one SBFD resource within the time period (S);
controlling the transceiver (302) to receive (S1130) a third configuration (C3) from the network device (51), wherein the third configuration (C3) indicates a downlink bandwidth part and an uplink bandwidth part; and
performing (S1140) a communication operation with the network device (51) according to the first configuration (C1), the second configuration (C2), and the third configuration (C3).

15. A method for setting subband full duplex, SBFD, resource, applied to a network device (51), **characterized in** comprising:
transmitting (S1410), by the network device (51), a first configuration (C1) to a user equipment, UE (52), wherein the first configuration (C1) indicates a plurality of transmission directions for a time period (S);
transmitting (S1420), by the network device (51), a second configuration (C2) to the UE (52), wherein the second configuration (C2) indicates at least one SBFD resource within the time period (S);
transmitting (S1430), by the network device (51), a third configuration (C3) to the UE (52), wherein the third configuration (C3) indicates a downlink bandwidth part and an uplink bandwidth part; and
performing (S1440), by the network device (51), a communication operation with the UE (52) according to the first configuration (C1), the second configuration (C2), and the third configuration (C3).
